(19) Europäisches Patentamt
European Patent Office
Office européen des brevets

(11) **EP 2 433 982 B1**

(12) **EUROPEAN PATENT SPECIFICATION**

(45) Date of publication and mention of the grant of the patent:
**03.12.2014 Bulletin 2014/49**

(51) Int Cl.:
***C08K 5/49*** *(2006.01)* ***C08K 5/526*** *(2006.01)*
***C08L 23/10*** *(2006.01)* ***H01B 3/44*** *(2006.01)*
*C08L 23/16* *(2006.01)* *C08K 5/098* *(2006.01)*

(21) Application number: **10180802.0**

(22) Date of filing: **28.09.2010**

(54) **Composition with low dissipation factor tan "delta"**

Zusammensetzung mit niedrigem Verlustfaktor tan "delta"

Composition avec une facteur de dissipation tan "delta" basse

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**28.03.2012 Bulletin 2012/13**


(73) Proprietor: **Borealis AG**
**1220 Vienna (AT)**

(72) Inventors:
- **Klimke, Katja**
  **4020 Linz (AT)**
- **Gloger, Dietrich**
  **4020 Linz (AT)**
- **Hagstrand, Per-Ola**
  **44446 Stenungsund (SE)**

(74) Representative: **Lux, Berthold et al**
**Maiwald Patentanwalts GmbH**
**Elisenhof**
**Elisenstraße 3**
**80335 München (DE)**


(56) References cited:
**EP-A1- 1 429 346**


Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 2 433 982 B1

## Description

The present invention is directed to a communication cable comprising a dielectric layer with a very low dissipation factor.

A coaxial cable is defined to comprise one centre conductor and one outer concentric conductor with an isolating layer separating them. Different thereto a triaxial cable comprises two outer concentric conductors instead of one. Usually, these cables are protected with an outermost jacket.

In a coaxial cable the diameter of the dielectric material is typically above 1 mm. In radio frequency cables the diameter of the dielectric usually varies between 4 mm and 52 mm.

For the transfer of radio frequency signals, e.g. in antenna systems of base stations of mobile phone networks, the use of coaxial (or triaxial) cables is common in the art.

Typically, radio frequency coaxial (or triaxial) cables are used as feeder or radiating cables. Feeder cables are used in the high power transmission from the power amplifier stage of a radio transmitter to the radiating antenna element or connection of a receiving antenna to the input stage of a radio receiver, or a combination of similar signal paths. An example of such an application is found at the base stations of mobile phone networks. Another application is in the radio shadow areas of said mobile phone systems such as tunnels, cellars, etc., where this type of cable can be used as the radiating element when provided with a perforated leaky outer conductor. The coaxial (or triaxial) cables are useful also in community antenna television (CATV) systems in which the transmitted signal conveys both analogue and digital television pictures, as well as on the subscriber lines of modem telephone systems (access networks) which use coaxial (or triaxial) cables as the transmission medium in the transfer of wideband information.

A typical coaxial (or triaxial) cable comprises an inner conductor made of copper or aluminum, a dielectric insulation layer made of a polymeric material, and (an) outer conductors made of copper or aluminum. Examples of outer conductors are metallic screens, foils or braids. Furthermore, in particular when polyethylene is used for the dielectric layer, the coaxial (or triaxial) cable comprises a skin layer between the inner conductor and the dielectric layer to improve adherence between inner conductor and dielectric layer and thus improve mechanical integrity of the cable.

An important requirement for the dielectric layer of coaxial (or triaxial) cables is that the attenuation of the signal should be as small as possible. Therefore, today said polymeric dielectric layer, typically polypropylene, is usually expanded by chemical or physical foaming to a level of up to 75 vol% or more.

Another issue to keep the attenuation as low as possible is the purity of the used polymer. Any residues within the polymer material may negatively influence the signal transfer. Thus for dielectric layers normally very clean material is used.

On the other hand additives must be used to avoid for instance degradation processes of the polymer material or to make the polymer processable.

To date it is was impossible to provide polymer compositions suitable as a dielectric layer in coaxial (or triaxial) cables which have low signal attenuation and are additionally longlasting and well processable.

Thus the object of the present invention is to provide a communication cable comprising a dielectric layer combining the properties of low signal attenuation and longevity. Further such a polymer composition should be good processable.

The finding of the present invention is that a polymer composition of polypropylene must be used in the dielectic layer, which contains a process stabilizer, e.g. a phosphorous antioxidant, and/or salts of fatty acids, wherein the cation is selected from group 2 of the periodic table.

Accordingly the present invention is directed to a communication cable comprising a conductor and a dielectric layer, said dielectric layer comprises a composition (A) comprising

(a) a polypropylene (PP), which has > 0.1 mol.% <2,1> erythro regiodefects and
(b) a phosphorous antioxidant (Pho-A) and/or a salt of a fatty acid (S-FA), the cation of the salt of the fatty acid (S-FA) is selected from group 2 of the periodic table.

Additionally, the present invention is also directed to a composition (A) according to claim 7.

Preferably the composition (A) comprises additionally (a) phenolic antioxidant(s) (Phe-A) being no phosphorous antioxidant (Pho-A). Additionally it is appreciated that the salt(s) of the fatty acid(s) (S-FA) is calcium stearate (Ca-S).

Accordingly the inventive communication cable comprises a conductor and a dielectric layer, said dielectric layer comprises a composition (A) comprising in particular

(a) at least 30 wt.-%, preferably at least 50 wt.-%, more preferably at least 75 wt.-%, yet more preferably of at least 80 wt.-%, of a polypropylene (PP) and
(b1) 1 to 3,000 ppm, preferably 100 to 2,500 pp, more preferably 200 to 2,000 ppm, of (a) phosphorous antioxidant(s) (Pho-A),

and/or

(b2) 1 to 500 ppm, preferably 10 to 350 ppm, more preferably 50 to 250 ppm, of (a) salt(s) of (a) fatty acid(s) (S-FA), the cation(s) of the salt(s) of the fatty acid(s) (S-FA) is (are) selected from group 2 of the periodic table,

(b3) optionally below 5,000 ppm, preferably below 3,000 ppm, more preferably 100 to 3,000 ppm, yet more preferably 200 to 2,000 ppm, of (a) phenolic antioxidant(s) (Phe-A) being no phosphorous antioxidant (Pho-A)

based on the composition (A).

As usual 1 ppm of additive or residues, e.g. ash content, corresponds to 1 mg additive or residues, e.g. ash content, in 1 kg composition.

Surprisingly it has been found out that the use of a phosphorous antioxidant (Pho-A) and/or a salt of a fatty acid (S-FA) in a polymer composition (A), in particular in polymer composition (A) containing (a) phenolic antioxidant(s) (Phe-A) being no phosphorous antioxidant (Pho-A), lead to a very low dissipation factor tan $\delta$ (see tables 1 to 3). It has been in particular observed that due to the presence of phenolic antioxidants (Phe-A) being no phosphorous antioxidant (Pho-A) signal attenuation occurs. However unfortunately it is hardly possible to abstain from phenolic antioxidants (Phe-A) being no phosphorous antioxidant (Pho-A) as otherwise degradation of polymers cannot be prevented. On the other hand the use of a phosphorous antioxidant (Pho-A) and/or a salt of a fatty acid (S-FA) can improve again signal transfer in compositions containing beside the polypropylene (PP) a phenolic antioxidant (Phe-A) being no phosphorous antioxidant (Pho-A). In other words a phosphorous antioxidant (Pho-A) and/or a salt of a fatty acid (S-FA) lowers the dissipation factor tan $\delta$ of polypropylene (PP) and in particular lowers the dissipation factor tan $\delta$ of compositions containing beside polypropylene (PP) phenolic antioxidants (Phe-A) being no phosphorous antioxidant (Pho-A). Accordingly the composition (A) according to this invention is especially suitable as a dielectric layer in communication cables.

A communication cable according to this invention is a coxial cable, triaxial cable or a data cable.

A coaxial (or triaxial) cable comprises an inner conductor preferably made of copper or aluminum, a dielectric layer, and (an) outer conductor(s) preferably made of copper or aluminum. Examples of outer conductors are metallic screens, foils or braids. Furthermore, in one embodiment, the coaxial (or triaxial) cable comprises a skin layer between the inner conductor and the dielectric layer to improve adherence between inner conductor and dielectric layer and thus improve mechanical integrity of the cable.

A data cable according to this invention is a multi-pair communication cable. The conductors are preferably made of copper or aluminum, which are surrounded by solid or foamed polymer insulation. A protective polymer jacket is covering the core.

Preferably the communication cable is a high frequency communication cable. A high frequency communication cable according to this invention is able to transmit frequencies of equal more than 200Mhz

Accordingly in one preferred embodiment the invention is directed to a high frequency communication cable being a coaxial (or triaxial) cable, wherein said cable comprises an (inner) conductor and a dielectric layer, preferably dielectric layer surrounding the (inner) conductor, and optionally (an) outer conductor(s).

The dielectric layer of the communication cable according to this invention must comprise a specific composition (A) as defined in detail below.

Preferably the dielectric layer according to this invention comprises at least 50 wt.-%, more preferably at least 75 wt.-%, still more preferably at least 95 wt.-% of the composition (A). In an especially preferred embodiment the dielectric layer consists of the composition (A). Preferably the dielectric layer is foamed.

Further it is preferred that the diameter of the dielectric material is above 1 mm, in particular between 4 mm and 52 mm.

In the following the composition (A) part of the dielectric layer is defined in more detail.

As indicated above the composition (A) must comprise at least one polypropylene (PP) and specific additives. First the additives are specified more precisely. Subsequently the polypropylene (PP) and optional additional polymer compounds are defined.

One essential aspect of the present invention is that the polymer composition (A) comprises process stabilizer. A process stabilizer according to this invention is an additive which prevents chain scission and/or combination of polymer chains. More precisely a process stabilizer according to this invention is an additive which reacts with hydroperoxides and thus prevents chain scission and/or combination. It has been in particular found out that phosphorous antioxidants (Pho-A) are suitable to achieve the desired low dissipation factor tan $\delta$ and/or permittivity $\varepsilon$. Especially good results are achievable in case phosphorous antioxidants (Pho-A) are organophosphites and/or organophosphonites. In a especially preferred embodiment the phosphorous antioxidants (Pho-A) are organophosphites, in particular organophosphites of formula (I)

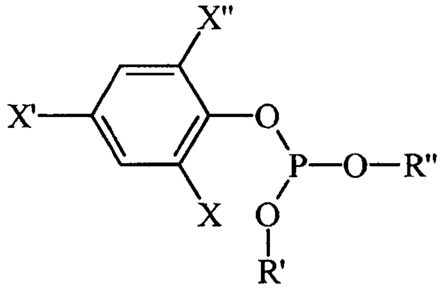

wherein

(a) X, X', and X'' are independently selected from the group consisting of -H, $-CH_3$, $- CH_2cH_3$, $-C(CH_3)_3$, $-(CH_2)_8CH_3$, $-C(CH_3)_2-C_6H_5$,
R' and R'' are independently selected from the group consisting of alkyl, alkyl-aryl, and aryl-alkyl
and wherein further
"$-C_6H_5$" means phenyl.

Accordingly taking the above said in mind the phosphorous antioxidants (Pho-A) are in particular selected from the group consisting of
tris-(2,4-di-tert-butylphenyl) phosphite (CAS no. 31570-04-4; M 647 g/mol), tetrakis-(2,4-di-tert-butylphenyl)-4,4'-biphenylen-di-phosphonite (CAS no. 38613-77-3; M 991 g/mol),
bis-(2,4-di-tert-butylphenyl)-pentaerythrityl-di-phosphite (CAS no. 26741-53-7; M 604 g/mol),
di-stearyl- pentaerythrityl-di-phosphite (CAS no. 3806-34-6; M 733 g/mol), tris-nonylphenyl phosphite (CAS no. 26523-78-4; M 689 g/mol),
bis(2,6-di-tert-butyl-4-methylphenyl)pentaerythrityl-di-phosphite (CAS no. 80693-00-1; M 633 g/mol),
2,2'-methylenebis (4,6-di-tert-butylphenyl) octyl-phosphite (CAS no. 126050-54-2; M 583 g/mol),
1,1,3-tris (2-methyl-4-ditridecyl phosphite-5-tert-butylphenyl) butane (CAS no. 68958-97-4; M 1831 g/mol),
4,4'-butylidenebis (3-methyl-6-tert-butylphenyl-di-tridecyl) phosphite (CAS no. 13003-12-8; M 1240 g/mol),
bis-(2,4-dicumylphenyl)pentaerythritol diposphite (CAS no. 154862-43-8; M 852 g/mol),
bis(2-methyl-4,6-bis(1,1-dimethylethyl) phenyl) phosphorous acid ethylester (CAS no. 145650-60-8; M 514 g/mol),
2,4,6-tris(tert-butyl)phenyl-2-butyl-2-ethyl-1,3-propandiolphosphit (CAS no. 161717-32-4, M 450 g/mol),
6-(3-(3-tert-butyl-4-hydroxy-5-methylphenyl)propoxy)-2,4,8,10-tetra-tert-butyldibenz[d,f][1.3.2]dioxaphosphepin (CAS no. 203255-81-6; M 660 g/mol), and
tetrakis-(2,4-di-tert-butyl-5-methylphenyl)-4,4'-biphenylen-di-phosphite (CAS no. 147192-62-9; M 1092 g/mol),

Especially preferred phosphorous antioxidants (Pho-A) are tris-(2,4-di-tert-butylphenyl) phosphite (CAS no. 31570-04-4; M 647 g/mol), tris-nonylphenyl phosphite (CAS no. 26523-78-4; M 689 g/mol), and bis-(2,4-dicumylphenyl)pentaerythritol diposphite (CAS no. 154862-43-8; M 852 g/mol) and among them tris(2,4-di-t-butylphenyl)phosphite and bis(2,4-dicumylphenyl)pentaerythritol diphosphite are most preferred.

Typical amounts of process stabilizer, preferably of phosphorous antioxidants (Pho-A) as defined above, in the instant composition (A) are in the range of 1 to 3,000 ppm, preferably 100 to 2,500 pp, more preferably 200 to 2,000 ppm.

The instant composition (A) may comprise different phosphorous antioxidants (Pho-A) as defined herein, however it is preferred that it comprises only one type of phosphorous antioxidant (Pho-A) as defined herein.

It is further appreciated that alternatively or additionally to the process stabilizer(s), i.e. the phosphorous antioxidants (Pho-A), the instant invention comprises a salt of a fatty acid (S-FA), the cation of the salt of a fatty acid (S-FA) is selected from group 2 of the periodic table.

Preferably the fatty acid (S-FA) is a saturated fatty acid. More preferably the (saturated) fatty acid (S-FA) has 10 to 25 carbon atoms more preferably 15 to 20 carbon atoms. Most preferably the fatty acid is stearate.

The cation of the salt of the fatty acid is preferably either magnesium or calcium, the latter especially preferred.

An especially preferred embodiment of a salt of a fatty acid (S-FA) is calcium stearate.

Typically the total amount fatty acids (S-FA) being in the form of salts, especially the total amount of calcium stearate , is 1 to 500 ppm, preferably 10 to 350 ppm, more preferably 50 to 250 ppm.

The instant composition (A) may comprise different fatty acids (S-FA) being in the form of salts as defined herein, however it is preferred that it comprises only one type of salt of a fatty acid (S-FA) as defined herein.

Additionally it has been discovered that the presence of zinc-stearate influences negatively the dissipation factor tan $\delta$. Accordingly it is preferred that the amount of zinc-stearate within the instant composition is below 100 ppm,

more preferably below 50 pp. It is especially appreciated that the inventive composition (A) is free of zinc-stearate, i. e. is not detectable within the instant composition (A).

Further the composition (A) of the present invention may comprise additionally (a) phenolic antioxidant(s) (Phe-A) being no phosphorous antioxidant (Pho-A) to increase the lifetime of the composition (A).

A phenolic antioxidant (Phe-A) being no phosphorous antioxidant (Pho-A) is a phenolic antioxidant which does not contain a phosphor atom (P).

Further the term "phenolic antioxidant" as used in the instant invention stands for any compound capable of slowing or preventing the oxidation of the polymer component, e.g. of the polypropylene (PP). Additionally such a phenolic antioxidant must of course comprise a phenolic residue.

Better results can be achieved in case the phenolic antioxidant (Phe-A) being no phosphorous antioxidant (Pho-A) is sterically hindered. The term "Sterically hindered" according to this invention means that the hydroxyl group (HO-) of the phenolic antioxidant (Phe-A) being no phosphorous antioxidant (Pho-A) is surrounded by sterical alkyl residues.

Accordingly the phenolic antioxidant (Phe-A) being no phosphorous antioxidant (Pho-A) preferably comprises the residue of formula (II)

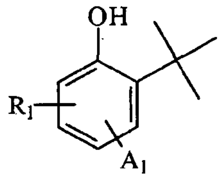

(II)

wherein

$R_1$ being located at the ortho- or meta-position to the hydroxyl-group and $R_1$ is $(CH_3)_3C$-, $CH_3$- or H, preferably $(CH_3)_3C$-, and

$A_1$ constitutes the remaining part of the phenolic antioxidant (Phe-A) and is preferably located at the para-position to the hydroxyl-group.

Preferably the phenolic antioxidant (Phe-A) being no phosphorous antioxidant (Pho-A) comprises the residue of formula (IIa)

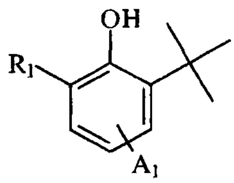

(IIa)

wherein

$R_1$ is $(CH_3)_3C$-, $CH_3$- or H, preferably $(CH_3)_3C$-, and

$A_1$ constitutes the remaining part of the phenolic antioxidant (Phe-A).

Preferably $A_1$ is in para-position to the hydroxyl-group.

Additionally the phenolic antioxidant (Phe-A) being no phosphorous antioxidant (Pho-A) shall preferably exceed a specific molecular weight. Accordingly the phenolic antioxidant (Phe-A) being no phosphorous antioxidant (Pho-A) has preferably a molecular weight of more than 785 g/mol, more preferably more than 1100 g/mol. On the other hand the molecular weight should be not too high, i.e. not higher than 1300 g/mol. A preferred range is from 785 to 1300 g/mol, more preferably from 1000 to 1300 g/mol, yet more preferably from 1100 to 1300 g/mol.

Further the phenolic antioxidant (Phe-A) being no phosphorous antioxidant (Pho-A) can be additionally defined by the amount of phenolic residues, in particular by the amount of phenolic residues of formula (II) or (IIa). Accordingly the phenolic antioxidant may comprise 1, 2, 3, 4 or more phenolic residues, preferably 1, 2, 3, 4 or more phenolic residues

of formula (II) or (IIa).

Moreover the phenolic antioxidant (Phe-A) being no phosphorous antioxidant (Pho-A) comprises mainly only carbon atoms, hydrogen atoms and minor amounts of O-atoms, mainly caused due to the hydroxyl group (HO-) of the phenolic residues. However the phenolic antioxidant(s) (Phe-A) being no phosphorous antioxidant (Pho-A) may comprise additionally minor amounts of N, and S atoms, but no P atoms. Preferably the phenolic antioxidant (Phe-A) being no phosphorous antioxidant (Pho-A) is constituted by C, H, O, N and S atoms only, more preferably the phenolic antioxidants (Phe-A) being no phosphorous antioxidant (Pho-A) is constituted by C, H and O only.

As stated above the phenolic antioxidant (Phe-A) being no phosphorous antioxidant (Pho-A) shall have a rather high molecular weight. A high molecular weight is an indicator for several phenolic residues. Thus it is in particular appreciated that the phenolic antioxidant (Phe-A) being no phosphorous antioxidant (Pho-A) has 4 or more, especially 4, phenolic residues, like the phenolic residue of formula (II) or (IIa).

As especially suitable phenolic antioxidants (Phe-A) being no phosphorous antioxidant (Pho-A) have been recognized compounds comprising at least one residue of formula (III)

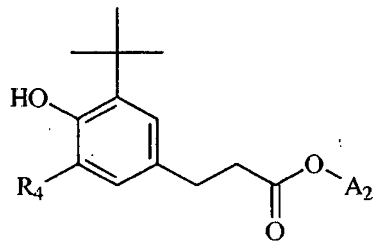

(III)

wherein

$R_4$ is $(CH_3)_3C$-, $CH_3$-, or H, preferably $(CH_3)_3C$-, and

$A_2$ constitutes the remaining part of the phenolic antioxidant (Phe-A).

Considering the above requirements the phenolic antioxidant (Phe-A) being no phosphorous antioxidant (Pho-A) is preferably selected from the group consisting of

2,6-di-tert-butyl-4-methylphenol (CAS no. 128-37-0; M 220 g/mol),

pentaerythrityl-tetrakis (3-(3,5-di-tert-butyl-4-hydroxyphenyl) propionate (CAS no. 6683-19-8; M 1178 g/mol),

octadecyl 3-(3',5'-di-tert-butyl-4-hydroxyphenyl)propionate (CAS no. 2082-79-3; M 531 g/mol)

1,3,5-trimethyl-2,4,6-tris-(3,5-di-tert-butyl-4-hydroxybenzyl) benzene (CAS no. 1709-70-2; M 775 g/mol),

2,2'-thiodiethylenebis (3,5-di-tert.-butyl-4-hydroxyphenyl) propionate (CAS no. 41484-35-9; M 643 g/mol),

1,3,5-tris(3',5'-di-tert. butyl-4'-hydroxybenzyl)-isocyanurate (CAS no. 27676-62-6, M 784 g/mol),

1,3,5-tris(4-tert. butyl-3-hydroxy-2,6-dimethylbenzyl)-1,3,5-triazine-2,4,6-(1H,3H,5H)-trione (CAS no. 40601-76-1, M 813 g/mol),

bis(3,3-bis(3'-tert-butyl-4'-hydroxyphenyl)butanic acid) glycolester (CAS no. 32509-66-3; M 794 g/mol),

4,4'-thiobis(2-tert-butyl-5-methylphenol) (CAS no. 96-69-5; M 358 g/mol),

2,2'-methylene-bis-(6-(1-methyl-cyclohexyl)-para-cresol) (CAS no. 77-62-3; M 637 g/mol),

3,3'-bis(3,5-di-tert-butyl-4-hydroxyphenyl)-N,N'-hexamethylenedipropionamide (CAS no. 23128-74-7; M 637 g/mol),

2,5,7,8-tetramethyl-2-(4',8',12'-trimethyltridecyl)-chroman-6-ol (CAS no. 10191-41-0; M 431 g/mol),

2,2-ethylidenebis (4,6-di-tert-butylphenol) (CAS no. 35958-30-6; M 439 g/mol), 1,1,3-tris(2-methyl-4-hydroxy-5'-tert-butylphenyl) butane (CAS no. 1843-03-4; M 545 g/mol),

3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol),

1,6-hexanediyl-bis(3,5-bis(1,1dimethylethyl)-4-hydroxybenzene)propanoate) (CAS no. 35074-77-2; M 639 g/mol),

2,6-di-tert-butyl-4-nonylphenol (CAS no. 4306-88-1; M 280 g/mol),

4,4'-butylidenebis(6-tert-butyl-3-methylphenol (CAS no. 85-60-9; M 383 g/mol);

2,2'-methylene bis(6-tert-butyl-4-methylphenol) (CAS no. 119-47-1; M 341 g/mol),

triethylenglycol-bis-(3-tert-butyl-4-hydroxy-5-methylphenyl) propionate (CAS no. 36443-68-2; M 587 g/mol),

a mixture of C13 to C15 linear and branched alkyl esters of 3-(3',5'-di-t-butyl-4'-hydroxyphenyl) propionic acid (CAS no. 171090-93-0; $M_w$ 485 g/mol),

6,6'-di-tert-butyl-2,2'-thiodip-cresol (CAS no. 90-66-4; M 359 g/mol),

4,6-bis (octylthiomethyl)-o-cresol (CAS no. 110553-27-0; M 425 g/mol),

benzenepropanoic acid, 3,5-bis(1,1-dimehtyl-ethyl)-4-hydroxy-,C7-C9-branched and linear alkyl esters (CAS no.

125643-61-0; $M_w$ 399 g/mol), 1,1,3-tris[2-methyl-4-[3-(3,5-di-tert-butyl-4-hydroxyphenyl)propionyloxy]-5-tert-butylphenyl]butane (CAS no. 180002-86-2; M 1326 g/mol), mixed styrenated phenols (M ca 320 g/mol; CAS no. 61788-44-1; M ca. 320 g/mol), butylated, octylated phenols (M ca 340 g/mol; CAS no. 68610-06-0; M ca 340 g/mol), and butylated reaction product of p-cresol and dicyclopentadiene ($M_w$ 700 to 800 g/mol; CAS no. 68610-51-5; $M_w$ 700 - 800 g/mol).

More preferably the phenolic antioxidant (Phe-A) being no phosphorous antioxidant (Pho-A) is selected from the group consisting of pentaerythrityl-tetrakis (3-(3,5-di-tert-butyl-4-hydroxyphenyl) propionate (CAS no. 6683-19-8; M 1178 g/mol), octadecyl 3-(3',5'-di-tert-butyl-4-hydroxyphenyl)propionate (CAS no. 2082-79-3; M 531 g/mol) bis(3,3-bis(3'-tert-butyl-4'-hydroxyphenyl)butanic acid) glycolester (CAS no. 32509-66-3; M 794 g/mol), 3,3'-bis(3,5-di-tert-butyl-4-hydroxyphenyl)-N,N'-hexamethylenedipropionamide (CAS no. 23128-74-7; M 637 g/mol), 3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol), 1,6-hexanediyl-bis(3,5-bis(1,1dimethylethyl)-4-hydroxybenzene)propanoate) (CAS no. 35074-77-2; M 639 g/mol), triethylenglycol-bis-(3-tert-butyl-4-hydroxy-5-methylphenyl) propionate (CAS no. 36443-68-2; M 587 g/mol), a mixture of C13 to C15 linear and branched alkyl esters of 3-(3',5'-di-t-butyl-4'-hydroxyphenyl) propionic acid (CAS no. 171090-93-0; $M_w$ 485 g/mol), and benzenepropanoic acid, 3,5-bis(1,1-dimehtyl-ethyl)-4-hydroxy-,C7-C9-branched and linear alkyl esters (CAS no. 125643-61-0; $M_w$ 399 g/mol),

The most preferred the phenolic antioxidant (Phe-A) being no phosphorous antioxidant (Pho-A) is pentaerythrityl-tetrakis (3-(3',5'-di-tert-butyl-4-hydroxyphenyl)-propionate (CAS no. 6683-19-8; M 1178 g/mol) preferably having the formula (IV)

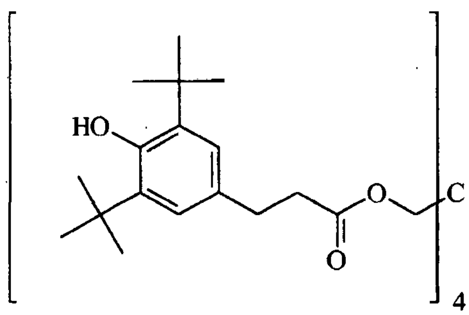

(IV)

The present polymer composition (A) may comprise different phenolic antioxidants (Phe-A) being no phosphorous antioxidant (Pho-A) as defined in the instant invention, however it is preferred that it comprises only one type of phenolic antioxidant (Phe-A) as defined herein.

It has been in particular discovered that the amount of phenolic antioxidants (Phe-A) being no phosphorous antioxidant (Pho-A) is preferably as low as possible to keep the signal attenuation as low as possible. Accordingly it is especially appreciated that the amount of phenolic antioxidants (Phe-A) is below 5,000 ppm, preferably below 4,800 ppm, more preferably in the range of 100 to 4,800 ppm, yet more preferably in the range of 200 to 4,700 ppm.

Additionally it has been discovered that the presence of hindered amine light stabilizers (HALS) influences negatively the dissipation factor tan $\delta$. Hindered amine light stabilizers (HALS) are known in the art. Preferably such hindered amine light stabilizers (HALS) are 2,6-alkyl-piperidine derivatives in particular 2,2,6,6-tetramethyl-piperidine derivatives. Accordingly it is preferred that the amount of hindered amine light stabilizers (HALS), e. g. the amount of 2,6-alkyl-piperidine derivatives, like the amount of 2,2,6,6-tetramethyl-piperidine derivatives, within the instant composition is below 500 ppm, more preferably below 100 ppm, yet more preferably below 50 ppm. It is especially appreciated that the inventive composition (A) is free of hindered amine light stabilizers (HALS), e. g. free of 2,6-alkyl-piperidine derivatives, like free of 2,2,6,6-tetramethyl-piperidine derivatives. Accordingly in one embodiment the hindered amine light stabilizers (HALS), e. g. the 2,6-alkyl-piperidine derivatives, like the 2,2,6,6-tetramethyl-piperidine derivatives, are not detectable within the instant composition (A).

Further the instant composition (A) must comprise a polymer, i. e. a polypropylene (PP).

The polypropylene (PP) is preferably featured by a rather low comonomer content. As the polypropylene (PP)

is the dominant part of the composition (A), also the composition as such is featured by low amounts of comonomers. Accordingly it is preferred that the composition (A) and/or the polypropylene (PP) has/have a comonomer content of equal or below 1.0 wt.-%, more preferably equal or below 0.8 wt.-%, yet more preferably equal or below 0.5 wt.-%.

Thus the polypropylene (PP) is preferably a random propylene copolymer (R-PP) or a propylene homopolymer (H-PP), the latter is especially preferred.

The term "random copolymer" indicates that the comonomers within the propylene copolymer (PP) are randomly distributed. The randomness defines the amount of isolated comonomer units, i.e. those which have no neighbouring comonomer units, compared to the total amount of comonomers in the polymer chain. In a preferred embodiment, the randomness of the propylene copolymer (R-PP) is at least 30 %, more preferably at least 50 %, even more preferably at least 60 %, and still more preferably at least 65 %.

In case the polypropylene (PP) is a random propylene copolymer (R-PP) it comprises monomers copolymerizable with propylene, for example comonomers such as ethylene and/or $C_4$ to $C_{20}$ $\alpha$-olefins, in particular ethylene and/or $C_4$ to $C_{10}$ $\alpha$-olefins, e.g. 1-butene and/or 1-hexene. Preferably the random propylene copolymer (R-PP) comprises, especially consists of, monomers copolymerizable with propylene from the group consisting of ethylene, 1-butene and 1-hexene. More specifically the random propylene copolymer (R-PP) comprises - apart from propylene - units derivable from ethylene and/or 1-butene. In a preferred embodiment the random propylene copolymer (R-PP) comprises units derivable from ethylene and propylene only. The comonomer content in the random propylene copolymer (R-PP) is preferably in the range of more than 0.5 to 1.0 wt.-%, still more preferably in the range of more than 0.5 to 0.8 wt.-%.

The expression homopolymer used in the instant invention relates to a polypropylene that consists substantially, i.e. of at least 99.5 wt.-%, more preferably of at least 99.8 wt.-%, of propylene units. In a preferred embodiment only propylene units in the propylene homopolymer (H-PP) are detectable. The comonomer content can be determined with $^{13}C$ NMR spectroscopy, as described below in the examples.

As stated above it is in particular appreciated that the polypropylene (PP) is a propylene homopolymer (H-PP).

Preferably the polypropylene (PP) is highly isotactic. Accordingly it is appreciated that the polypropylene (PP) has a rather high pentad isotacticity <mmmm>, i.e. higher than 98 mol.-%, more preferably higher than 98.5 mol.-%, still more preferably higher than 98.6 mol.-%

A further characteristic of the polypropylene (PP) is that it is preferably produced by a single-site catalyst. Polypropylenes produced by single-site catalyst are inter alia featured by a rather high amount of regio misinsertions of propylene within the polymer chain. Accordingly the polypropylene (PP) is featured by a high amount of <2,1> erythro regiodefects, i.e. of more than 0.1 mol.-%, more preferably of equal or more than 0.2 mol.-%, yet more preferably of more than 0.4 mol.-%, still more preferably of more than 0.6 mol.-%, like in the range of 0.7 to 0.9 mol.-%, determined by $^{13}C$-NMR spectroscopy.

The polypropylene (PP) can be further specified by the melting temperature. Accordingly it is appreciated that the polypropylene (PP) has a melting temperature ($T_m$) measured by differential scanning calorimetry (DSC) of at least 120.0 °C, more preferably of at least 150 °C. Thus it is in particular appreciated that the melting temperature ($T_m$) measured by differential scanning calorimetry (DSC) of the polypropylene (PP) is in the range of 120 to 163 °C, more preferably in the range of 150 to 160 °C, yet more preferably in the range of 151 to 159 °C, and still more preferably in the range of 151 to 155 °C.

Additionally it is appreciated that the polypropylene (PP) of the instant invention has rather high crystallization temperature ($T_c$). Thus it is preferred that the polypropylene (PP) has crystallization temperature ($T_c$) measured by differential scanning calorimetry (DSC) at least 110 °C, more preferably of at least 111 °C. Accordingly the polypropylene (PP) has preferably a crystallization temperature ($T_c$) measured by differential scanning calorimetry (DSC) in the range of 110 to 120 °C, more preferably in the range of 111 to 117 °C.

The polypropylene (PP) can have a xylene cold soluble content (XCS) in a broad range, i.e. equal or below 8.0 wt.-%. Accordingly the polypropylene (PP) may have a xylene cold soluble content (XCS) measured according to ISO 6427 in the range of 0.3 to 8.0 wt.-%, like 0.5 to 6.5 wt.-%. However in preferred embodiments the polypropylene (PP) has a xylene cold soluble (XCS) content in the range of 0.3 to 1.5 wt.-%, more preferably in the range of 0.3 to 1.3 wt.-%, yet more preferably in the range of 0.4 to 1.0 wt.-%.

The amount of xylene cold soluble (XCS) additionally indicates that the polypropylene (PP) is preferably free of any elastomeric polymer component, like an ethylene propylene rubber. In other words polypropylene (PP) shall be not a heterophasic polypropylene, i.e. a system consisting of a polypropylene matrix in which an elastomeric phase is dispersed. Such systems are featured by a rather high xylene cold soluble content. However that does not exclude the option that the composition (A) as a whole might contain a rubber material. Thus in one embodiment the polypropylene (PP) may constitute the matrix of a heterophasic system (see below).

Especially good results are achievable in terms of good balance of dissipation factor tan $\delta$ and good formability by using a specifically selected polypropylene (PP) which is additionally defined by the following features.

Preferably the polypropylene (PP) is of linear structure and thus does not show (or nearby does not show) a kind of branching. Accordingly it is appreciated that the polypropylene (PP) of the instant invention has preferably a

branching index g' of not less than 0.9, preferably more than 0.9, like at least 0.95. In other words if the polypropylene (PP) has some kind of branching it shall be rather moderate. Accordingly the branching index g' of the polypropylene (PP) is preferably in the range of 0.9 to 1.0, more preferably in the range of more than 0.9 to 1.0, like in the range of 0.96 to 1.0. In an especially preferred embodiment the polypropylene (PP) shows no branching, i.e. the polypropylene (PP) has a branching index g' of 1.0. A low g'-value is an indicator for a high branched polymer. In other words, if the g'-value decreases, the branching of the polypropylene increases. The exact determination of the g'-value is specified in the example section.

As the polypropylene (PP) according to this invention is preferably of non-branched structure it does also not show a significant amount of gel content. Gels are a typical phenomena of polypropylenes being crosslinked. Thus the gel content is a good indicator for the chemical modification of the polypropylene. Accordingly the polypropylene (PP) of the present invention is featured by relatively moderate gel content, i.e. of not more than 0.50 wt.-%, more preferably of not more than 0.25 wt.-%, still more preferably of not more than 0.15 wt.-%, like below 0.15 wt.-%, yet more preferably not more than 0.10 wt.-%, determined as the relative amount of polymer insoluble in boiling xylene (xylene hot insoluble fraction, XHI). In an especially preferred embodiment no gel content is detectable.

As already mentioned above the polypropylene (PP) is preferably obtainable by the use of a specific metallocene catalyst system. Accordingly the polypropylene (PP) preferably has not been produced by a Ziegler-Natta catalyst. Thus the titanium (Ti) residue content within the polypropylene (PP) is preferably below 10 ppm, even more preferred titanium (Ti) is not detectable. Further the polypropylene (PP) is preferably featured by an ash content below 100 ppm, yet more preferably below 80 ppm, still more preferably below 50 ppm. Such low values are only possible in case specific catalyst system are used, as for instance a catalyst system as defined below. Accordingly the low ash content is preferably obtained without any purification step.

Further as the catalyst used is preferably non-supported, it is appreciated that the silicon (Si) residue content within the polypropylene (PP) is below 10 ppm, more preferably below 5 ppm, like below 1 ppm. In a specific embodiment no silicon (Si) within the polypropylene (PP) is detectable.

The stepwise isothermal segregation technique (SIST) provides a possibility to determine the softening and melting temperature range. The precise measuring method is specified in the example section. Thereby rather high amounts (rather high melt enthalpy [J/g]) of polymer fractions crystallizing at high temperatures indicate a rather high amount of high melting material. Thus it is appreciated that the polypropylene (PP) comprises less than 15.0 wt.-%, more preferably less than 12.0 wt-%, still more preferably less than 10.0 wt.-%, melting in a SIST analysis above 160°C.

Additionally it is appreciated that the polypropylene (PP) comprises not more than 70.0 wt.-%, more preferably not more than 68.0 wt.-%, like not more than 67.0 wt.-%, of a crystalline fraction melting in a SIST analysis in the range from 140 to 160°C. On the other hand the crystalline fraction melting in a SIST analysis in the range from 140 to 160°C should be not too low. Thus it is additionally and/or alternatively to the upper range preferred that the polypropylene (PP) comprises more than 45.0 wt.-%, more preferably more than 50.0 wt.-%, yet more preferably more than 55.0 wt.-%, still yet more preferably more than 58.0 wt.-%, of a crystalline fraction melting in a SIST analysis in the range from 140 to 160°C. Thus it is appreciated that the polypropylene (PP) comprises a crystalline fraction having a lamella melting in a SIST analysis in the range from 140 to 160°C in the amount of 45.0 to 70.0 wt.-%, more preferably in the amount of 55.0 to 68.0 wt.-%, yet more preferably in the amount of 58.0 to 67.0 wt.-%.

The molecular weight distribution (MWD) is the relation between the numbers of molecules in a polymer and the individual chain length. The molecular weight distribution (MWD) is expressed as the ratio of weight average molecular weight ($M_w$) and number average molecular weight ($M_n$). The number average molecular weight ($M_n$) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight ($M_w$) is the first moment of a plot of the weight of polymer in each molecular weight range against molecular weight.

The number average molecular weight ($M_n$) and the weight average molecular weight ($M_w$) as well as the molecular weight distribution (MWD) are determined by gel permeation chromatography (GPC) (ISO 16014-4 2003).

Accordingly it is preferred that the polypropylene (PP) has a weight average molecular weight ($M_w$) from 100,000 to 600,000 g/mol, more preferably from 200,000 to 500,000 g/mol.

The number average molecular weight ($M_n$) of the polypropylene (PP) is preferably in the range of 5,000 to 400,000 g/mol, more preferably from 10,000 to 300,000 g/mol.

A broad molecular weight distribution (MWD) improves the processability of the polypropylene (PP). Accordingly it is appreciated that the molecular weight distribution (MWD) measured according to ISO 16014 is at least 2.8, more preferably at least 3.0, like 3.3. On the other hand a rather broad molecular weight distribution (MWD) indicates rather high amount of low molecular weight fractions which contribute to the xylene soluble content without improving the dielectrical performance. Therefore, in an alternative embodiment the molecular weight distribution (MWD) is preferably between 2.8 to 8.0, still more preferably in the range of 3.0 to 5.0, like 3.0 to 3.4, yet more preferably in the range of 3.3 to 3.5.

Furthermore, it is preferred that the polypropylene (PP) has a melt flow rate (MFR) given in a specific range.

The melt flow rate measured under a load of 2.16 kg at 230 °C (ISO 1133) is denoted as $MFR_2$ (230 °C). Accordingly, it is preferred that the polypropylene (PP) has an $MFR_2$ (230 °C) of more than 0.5 g/10min, more preferably more than 2.0 g/10min, yet more preferably of more than 3.0 g/10min. Accordingly it is appreciated that the $MFR_2$ (230 °C) measured according to ISO 1133 is in the range of o.5 to 10.0 g/10min, more preferably in the range of 2.0 to 10.0 g/10min, yet more preferably in the range of 2.0 to 6.0 g/10min, like in the range of 2.0 to 4.0 g/10min, still more preferably in the range of 3.0 to 6.0 g/10min.

As mentioned above the polypropylene (PP) is not necessarily the only polymer in the composition (A).

In one aspect the polypropylene (PP) constitutes the matrix of a heterophasic system. Accordingly an heterophasic propylene copolymer according to this invention comprises as polymer components the polypropylene (PP) as the matrix and an elastomeric copolymer (E).

The elastomeric copolymer (E) preferably comprises, more preferably consists of, units derivable from (i) propylene and (ii) ethylene and/or at least another $C_4$ to $C_{12}$ $\alpha$-olefin, like $C_4$ to $C_{10}$ $\alpha$-olefin, more preferably units derivable from (i) propylene and (ii) ethylene and at least another $\alpha$-olefin selected form the group consisting of 1-butene, 1-pentene, 1-hexene, 1-heptene and 1-octene. The elastomeric copolymer (E) may additionally contain units derived from a conjugated diene, like butadiene, or a non-conjugated diene, however it is preferred that the elastomeric copolymer (E) consists of units derivable from (i) propylene and (ii) ethylene and/or $C_4$ to $C_{12}$ $\alpha$-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbornene; and 5-cyclohexylidene-2-norbornene. Preferred non-conjugated dienes are 5-ethylidene-2-norbornene, 1,4-hexadiene and dicyclopentadiene.

Accordingly the elastomeric copolymer (E) comprises at least units derivable from propylene and ethylene and may comprise other units derivable from a further $\alpha$-olefin as defined in the previous paragraph. However it is in particular preferred that elastomeric copolymer (E) comprises units only derivable from propylene and ethylene and optionally a conjugated diene, like butadiene, or a non-conjugated diene as defined in the previous paragraph, like 1,4-hexadiene. Thus an ethylene propylene non-conjugated diene monomer polymer (EPDM) and/or an ethylene propylene rubber (EPR) as elastomeric copolymer (E) is especially preferred, the latter most preferred.

Additionally or alternatively to the elastomeric copolymer (E) the composition (A) may comprise a high melt strength polypropylene (HMS-PP).

Such polymer types are characterized by a certain degree of branching. Possible high melt strength polypropylenes (HMS-PP) are so called Y/H-polypropylenes and for instance described in EP 0 787 750, i.e. single branched polypropylene types (Y polypropylenes having a backbone with a single long side-chain and an architecture resembles a "Y") and polypropylene types in which polymer chains are coupled with a bridging group (an architecture resembles a "H"). Such polypropylenes are characterized by rather high melt strength. A parameter of the degree of branching is the branching index g' as defined above. Thus it is preferred that the branching index g' of the high melt strength polypropylene (HMS-PP) shall be less than 0.9, more preferably less than 0.8. In another preferred embodiment the branching index g' of the high melt strength polypropylene (HMS-PP) shall be preferably less than 0.7.

The high degree of branching of the high melt strength polypropylene (HMS-PP) contributes also to its melt strength. Accordingly it is preferred that the high melt strength polypropylene (HMS-PP) is further characterized by a strain hardening behavior with a haul-off force $F_{max}$ of at least 10.0 cN and a draw down velocity $V_{max}$ of at least 200 mm/s, more preferably by a strain hardening behavior with a haul-off force $F_{max}$ of at least 20.0 cN and a draw down velocity $V_{max}$ of at least 250 mm/s, yet more preferably by a strain hardening behavior with a haul-off force $F_{max}$ of at least 25.0 cN and a draw down velocity $V_{max}$ of at least 250 mm/s.

Such a high melt strength polypropylene (HMS-PP) is preferably obtained by modifying, i.e. chemically modifying, a polypropylene. Such a modification is necessary to achieve the branching structure and/or the strain hardening phenomena of the high melt strength polypropylene (HMS-PP). Such a modification has also influence on the gel content of the high melt strength polypropylene (HMS-PP). Accordingly it is justified to define the high melt strength polypropylene (HMS-PP) further and/or alternatively by its gel content. Thus it is appreciated that the high melt strength polypropylene (HMS-PP) is featured by a relatively moderate gel content, i.e. of not more than 1.00 wt.-%, even more preferred of not more than 0.80 wt.-%, still more preferred of not more than 0.50 wt.-% determined as the relative amount of polymer insoluble in boiling xylene (xylene hot insoluble fraction, XHI). On the other hand the high melt strength polypropylene (HMS-PP) may show a certain degree of branching and thus a certain amount of gel content, i.e. of at least 0.15 wt.-%, more preferably of at least 0.27 wt.-%. Thus a preferred range for the gel content of the high melt strength polypropylene (HMS-PP) is 0.05 to 0.90 wt.-%, more preferred 0.26 to 0.8 wt.-%.

Additionally it is preferred that in the melt strength polypropylene (HMS-PP) has an $MFR_2$ (230 °C) in a range of 1.0 to 10.0 g/10 min, more preferably of 4.0 to 8.5 g/10 min, still more preferably of 6.0 to 8.0 g/10 min.

Preferably, the high melt strength polypropylene (HMS-PP) has a density of at least 850 $kg/m^3$, more preferably of at least 875 $kg/m^3$ and most preferably of at least 900 $kg/m^3$.

Further, preferably, the high melt strength polypropylene (HMS-PP) has a density of not more than 950 $kg/m^3$, more preferably of not more than 925 $kg/m^3$ and most preferably of not more than 910 $kg/m^3$.

Preferably, the high melt strength polypropylene (HMS-PP) has a melting point of at least 140°C, more preferably of at least 150°C and most preferably of at least 160°C.

As stated above, the melt strength polypropylene (HMS-PP) is preferably a modified polypropylene. Accordingly the melt strength polypropylene (HMS-PP) can be further defined by the way obtained. Thus the melt strength polypropylene (HMS-PP) is preferably the result of treating an unmodified polypropylene (A') with thermally decomposing radical-forming agents and/or with ionizing radiation. However in such a case a high risk exists that the polypropylene (A') is degraded, which is detrimental. Thus it is preferred that the modification is accomplished by the use of bifunctionally unsaturated monomer(s) and/or multifunctionally unsaturated low molecular weight polymer(s) as chemically bound bridging unit(s). A suitable method to obtain the melt strength polypropylene (HMS-PP) is for instance disclosed in EP 0 787 750, EP 0 879 830 A1 and EP 0 890 612 A2. All documents are herewith included by reference. Thereby, the amount of peroxide is preferably in the range of 0.05 to 3.00 wt.-% based on the unmodified polypropylene (A').

Accordingly in one preferred embodiment the high melt strength polypropylene (HMS-PP) comprises units derived from

(i) propylene and
(ii) bifunctionally unsaturated monomer(s) and/or multifunctionally unsaturated low molecular weight polymer(s).

"Bifunctionally unsaturated or multifunctionally unsaturated" as used above means preferably the presence of two or more non-aromatic double bonds, as in e.g. divinylbenzene or cyclopentadiene or polybutadiene. Only such bi- or multifunctionally unsaturated compounds are used which can be polymerized preferably with the aid of free radicals. The unsaturated sites in the bi- or multifunctionally unsaturated compounds are in their chemically bound state not actually "unsaturated", because the double bonds are each used for a covalent bond to the polymer chains of the polypropylene (A').

Reaction of the bifunctionally unsaturated monomer(s) and/or multifunctionally unsaturated low molecular weight polymer(s), preferably having a number average molecular weight ($M_n$) $\leq$ 10000 g/mol, synthesized from one and/or more unsaturated monomers with the propylene polymer composition may be performed in the presence of a thermally free radical forming agent, e. g. decomposing free radical-forming agent, like a thermally decomposable peroxide and/or ionizing radiation or microwave radiation.

The bifunctionally unsaturated monomers may be

- divinyl compounds, such as divinylaniline, m-divinylbenzene, p-divinylbenzene, divinylpentane and divinylpropane;
- allyl compounds, such as allyl acrylate, allyl methacrylate, allyl methyl maleate and allyl vinyl ether;
- dienes, such as 1,3-butadiene, chloroprene, cyclohexadiene, cyclopentadiene, 2,3-dimethylbutadiene, heptadiene, hexadiene, isoprene and 1,4-pentadiene;
- aromatic and/or aliphatic bis (maleimide) bis (citraconimide) and mixtures of these unsaturated monomers.

Especially preferred bifunctionally unsaturated monomers are 1,3-butadiene, isoprene, dimethyl butadiene and divinylbenzene.

The multifunctionally unsaturated low molecular weight polymer, preferably having a number average molecular weight ($M_n$) $\leq$ 10000 g/mol may be synthesized from one or more unsaturated monomers.

Examples of such low molecular weight polymers are

- polybutadienes, especially where the different microstructures in the polymer chain, i.e. 1,4-cis, 1,4-trans and 1,2-(vinyl) are predominantly in the 1,2-(vinyl) configuration
- copolymers of butadiene and styrene having 1,2- (vinyl) in the polymer chain.

A preferred low molecular weight polymer is polybutadiene, in particular a polybutadiene having more than 50.0 wt.-% of the butadiene in the 1,2-(vinyl) configuration.

The high melt strength polypropylene (HMS-PP) may contain more than one bifunctionally unsaturated monomer and/or multifunctionally unsaturated low molecular weight polymer. Even more preferred the amount of bifunctionally unsaturated monomer(s) and multifunctionally unsaturated low molecular weight polymer(s) together in the high melt strength polypropylene (HMS-PP) is 0.01 to 10.0 wt.-% based on said high melt strength polypropylene (HMS-PP).

As stated above it is preferred that the bifunctionally unsaturated monomer(s) and/or multifunctionally unsaturated low molecular weight polymer(s) are used in the presence of a thermally decomposing free radical-forming agent.
Peroxides are preferred thermally decomposing free radical-forming agents. More preferably the thermally decomposing free radical-forming agents are selected from the group consisting of acyl peroxide, alkyl peroxide, hydroperoxide, perester and peroxycarbonate.
The following listed peroxides are in particular preferred:

Acyl peroxides: benzoyl peroxide, 4-chlorobenzoyl peroxide, 3-methoxybenzoyl peroxide and/or methyl benzoyl peroxide.

Alkyl peroxides: allyl t-butyl peroxide, 2,2-bis(t-butylperoxybutane), 1,1-bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1-di-(t-amylperoxy)cyclohexane, t-amyl peroxide, t-butylcumyl peroxide, t-butyl peroxide and/or 1-hydroxybutyl n-butyl peroxide.

Peresters and peroxy carbonates: butyl peracetate, cumyl peracetate, cumyl perpropionate, cyclohexyl peracetate, di-t-butyl peradipate, di-t-butyl perazelate, di-t-butyl perglutarate, di-t-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Or mixtures of these above listed free radical-forming agents.

The unmodified polypropylene (A') to prepare such a high melt strength polypropylene (HMS-PP) has preferably a $MFR_2$ (230 °C) in a range of 0.05 to 45.00 g/10 min. More preferably the $MFR_2$ (230 °C) is in a range of 0.05 to 35.00 g/10 min in case the unmodified polypropylene (A') is a homopolymer. On the other hand the $MFR_2$ (230 °C) is in a range of 0.05 to 45.00 g/10 min in case the unmodified polypropylene (A') is a copolymer.
Preferably the unmodified polypropylene (A') is a homopolymer.
Preferably the high melt strength polypropylene (HMS-PP) is produced from the unmodified polypropylene (A') as defined above under process conditions as defined in detail below.
Accordingly the composition (A) of this invention may comprise apart from the additives and the polypropylene (PP) additionally the elastomeric copolymer (E) and/or the high melt strength polypropylene (HMS-PP). In such cases the composition (A) preferably comprises

(a) at least 30 wt.-% of the polypropylene (PP), preferably at least 50 wt.-%, more preferably at least 75 wt.-%, of the polypropylene (PP)
(b1) optionally at least 10 wt.-%, like in the range of 10 to 20 wt.-%, of the elastomeric propylene copolymer (EP), and/or
(b2) optionally at least 10 wt.-%, like in the range of the 10 to 20 wt.-%, of the high melt strength polypropylene (HMS-PP),
preferably based on the polymer components present in the composition (A)
and wherein the composition (A) comprises further
(c1) 1 to 3,000 ppm of (a) phosphorous antioxidant(s) (Pho-A), and/or
(c2) 1 to 200 ppm of (a) salt(s) of a fatty acid(s) (S-FA), preferably of calcium stearate (Ca-S), and
(c3) optionally below 5,000 ppm (a) phenolic antioxidant(s) (Phe-A) being no phosphorous antioxidant(s) (Pho-A).

Further it has been discovered that especially good results are obtainable in case the instant composition (A) comprises at least 50 wt.-%, preferably at least 70 wt.-%, more preferably at least 75 wt.-%, yet more preferably of at least 80 wt.-%, of polymers in total.
Further it is appreciated that the composition (A) as defined in the instant invention is foamed. Typically the composition (A) is expanded by chemical or physical foaming to a level of up to 75 vol% or more.
Due to the specific selection of additives in the composition (A) and thus in the dielectric layer the attenuation can be kept very low. Accordingly the instant composition (A) and/or the dielectric layer has/have preferably a dissipation

factor tan δ of less than 120 x $10^{-6}$ at 1.9 GHz, more preferably of less than 115 x $10^{-6}$ at 1.9 GHz, still more preferably of less than 110 x $10^{-6}$ at 1.9 GHz.

Further the invention is directed to the use of a phosphorous antioxidant (Pho-A) and/or of a salt of a fatty acid (S-FA), the cation of the salt of the fatty acid (S-FA) is selected from group 2 of the periodic table, like calcium stearate (Ca-S), in a composition (or in a dielectric layer) to reduce signal attenuation in said composition (or in said dielectric layer)), wherein said composition comprises a polypropylene, like a polypropylene (PP) as defined above (or wherein said dielectric layer comprises a composition. More specifically the phosphorous antioxidant (Pho-A) and/or the salt of a fatty acid (S-FA) is/are used to keep the dissipation factor tan δ of said composition (or of said dielectric layer) equal or below 120 x $10^{-6}$ at 1.9 GHz, more preferably of less than 115 x $10^{-6}$ at 1.9 GHz, still more preferably of less than 110 x $10^{-6}$ at 1.9 GHz.

More preferably the composition comprises additionally (a) phenolic antioxidant(s) (Phe-A) being no phosphorous antioxidant (Pho-A). It has been in particular observed that the dissipation factor tan δ can be lowered of compositions comprising a polypropylene (PP) and additionally a phenolic antioxidants (Phe-A) being no phosphorous antioxidant (Pho-A) as defined in the instant invention by adding to said composition a phosphorous antioxidant (Pho-A) and/or a salt of a fatty acid (S-FA), the cation of the salt of the fatty acid (S-FA) is selected from group 2 of the periodic table, like calcium stearate (Ca-S).

Preferably the composition is the composition (A) as defined above.

The polypropylene (PP) or the heterophasic propylene copolymer comprising the polypropylene (PP) can be produced in a known manner. Accordingly the polypropylene (PP) or the heterophasic propylene copolymer can be produced in one reactor or in a sequential polymerization process. Typically a sequential polymerization process comprises at least two reactors connected in series, wherein said process comprises the steps of

(A) polymerizing in a first reactor propylene and optionally at least one $C_5$ to $C_{12}$ α -olefin obtaining a first fraction,
(B) transferring said first fraction in a second reactor,
(C) polymerizing in said second reactor and in the presence of said first fraction propylene and optionally at least one $C_2$ to $C_{12}$ α-olefin different to propylene obtaining a second fraction, said first reaction and said second fraction form the polypropylene (PP).

In case the heterophasic propylene copolymer is produced subsequent to the second reactor at least a third reactor follows in which the elastomeric copolymer (E) is produced.

The term "sequential polymerization process" indicates that the polypropylene is preferably produced in at least two reactors connected in series. The term "polymerization reactor" shall indicate that the main polymerization takes place. Thus in case the process consists of two polymerization reactors, this definition does not exclude the option that the overall process comprises for instance a pre-polymerization step in a pre-polymerization reactor. The term "consists of" is only a closing formulation in view of the main polymerization reactors.

The first reactor is preferably a slurry reactor and can be can be any continuous or simple stirred batch tank reactor or loop reactor operating in bulk or slurry. Bulk means a polymerization in a reaction medium that comprises of at least 60 % (wt/wt), preferably 100% monomer. According to the present invention the slurry reactor is preferably a (bulk) loop reactor.

The second reactor and any subsequent reactor are preferably gas phase reactors. Such gas phase reactors can be any mechanically mixed or fluid bed reactors. Preferably the gas phase reactor s comprise a mechanically agitated fluid bed reactor with gas velocities of at least 0.2 m/sec. Thus it is appreciated that the gas phase reactor is a fluidized bed type reactor preferably with a mechanical stirrer.

The condition (temperature, pressure, reaction time, monomer feed) in each reactor is dependent on the desired product which is in the knowledge of a person skilled in the art. A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379, and WO 98/58976. The contents of these documents are included herein by reference.

Preferably, in the instant process for producing the polypropylene (PP) as defined above the conditions for the first reactor of step (A) may be as follows:

- the temperature is within the range of 40 °C to 110 °C, preferably between 60 °C and 100 °C, 70 to 90 °C,
- the pressure is within the range of 20 bar to 80 bar, preferably between 40 bar to 70 bar,
- hydrogen can be added for controlling the molar mass in a manner known per se.

Subsequently, the reaction mixture from step (A) is transferred to the second reactor, i.e. to step (C), whereby the conditions in step (C) are preferably as follows:

- the temperature is within the range of 50 °C to 130 °C, preferably between 60 °C and 100 °C,
- the pressure is within the range of 5 bar to 50 bar, preferably between 15 bar to 40 bar,
- hydrogen can be added for controlling the molar mass in a manner known per se.

The residence time can vary in both reactor zones.

In one embodiment of the process for producing polypropylene the residence time in bulk reactor, e.g. loop is in the range 0.2 to 4 hours, e.g. 0.3 to 1.5 hours and the residence time in gas phase reactor will generally be 0.2 to 6.0 hours, like 0.5 to 4.0 hours.

If desired, the polymerization may be effected in a known manner under supercritical conditions in the first reactor and/or as a condensed mode in the gas phase reactor.

The present process may also encompass a pre-polymerization prior to the polymerization in the first reactor. The pre-polymerization can be conducted in the first reactor, however it is preferred that the pre-polymerization takes place in a separate reactor, so called pre-polymerization reactor.

As catalyst preferably solid catalyst system (SCS) is used. Accordingly the catalyst can be a Ziegler-Natta catalyst or metallocene catalyst, the latter is especially preferred. Thus in one preferred embodiment the solid catalyst system (SCS) comprises

(i) a transition metal compound of formula (I)

$$(Cp)_2R_nMX_2 \qquad (I)$$

wherein

| | |
|---|---|
| "M" | is zirconium (Zr) or hafnium (Hf), preferably zirconium (Zr), |
| each "X" | is independently a monovalent anionic σ-ligand, |
| each "Cp" | is an organic ligand (L) independently selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl, said organic ligands (L) coordinate to the transition metal (M), |
| "R" | is a bridging group linking said organic ligands (L), |
| "n" | is 1 or 2, preferably 1, and |

(ii) optionally a cocatalyst (Co) comprising an element (E) of group 13 of the periodic table (IUPAC), preferably a cocatalyst (Co) comprising a compound of A1.

The term "σ-ligand" is understood in the whole description in a known manner, i.e. a group bound to the metal via a sigma bond. Thus the anionic ligands "X" can independently be selected from the group consisting of hydrogen, halogen, $C_1$ to $C_{20}$ alkyl, $C_1$ to $C_{20}$ alkoxy, $C_2$ to $C_{20}$ alkenyl, $C_2$ to $C_{20}$ alkynyl, $C_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", -PR"$_3$, -SiR"$_3$, -OSiR"$_3$ and -NR"$_2$, wherein each R" is independently hydrogen, $C_1$ to $C_{20}$ alkyl $C_2$ to $C_{20}$ alkenyl, $C_2$ to $C_{20}$ alkinyl, $C_3$ to $C_{12}$ cycloalkyl or $C_6$ to $C_{20}$ aryl. In a preferred embodiments the anionic ligands "X" are identical and either halogen, like C1, methyl or benzyl.

A preferred monovalent anionic ligand is halogen, in particular chlorine (Cl).

The substituted Cp-ligand(s) may have one or more substituent(s) being selected form the group consisting of halogen, hydrocarbyl (e.g. $C_1$ to $C_{20}$ alkyl, $C_1$ to $C_{20}$ alkenyl, $C_2$ to $C_{20}$ alkinyl, , $C_3$ to $C_{20}$ cycloalkyl, like $C_1$ to $C_{20}$ alkyl substituted $C_5$ to $C_{20}$ cycloalkyl, $C_6$ to $C_{20}$ aryl, $C_5$ to $C_{20}$ cycloalkyl substituted $C_1$ to $C_{20}$ alkyl wherein the cycloalkyl residue is substituted by $C_1$ to $C_{20}$ alkyl, $C_7$ to $C_{20}$ arylalkyl, $C_3$ to $C_{12}$ cycloalkyl which contains 1, 2, 3 or 4 heteroatom(s) in the ring moiety, $C_6$ to $C_{20}$-heteroaryl, $C_1$ to $C_{20}$-haloalkyl, -SiR"$_3$, - SR", -PR"$_2$ or -NR"$_2$, each R" is independently a hydrogen or hydrocarbyl (e. g. $C_1$ to $C_{20}$ alkyl, $C_1$ to $C_{20}$ alkenyl, $C_2$ to $C_{20}$ alkinyl, $C_3$ to $C_{12}$ cycloalkyl, or $C_6$ to $C_{20}$ aryl) or e.g. in case of-NR"$_3$, the two substituents R" can form a ring, e.g. five-or six-membered ring, together with the nitrogen atom wherein they are attached to.

Further "R" of formula (I) is preferably a bridge of 1 to 7 atoms, e. g. a bridge of 1 to 4 C-atoms and 0 to 4 heteroatoms, wherein the heteroatom(s) can be e.g. silicon (Si), germanium (Ge) and/or oxygen (O) atom(s), whereby each of the bridge atoms may bear independently substituents, such as $C_1$ to $C_{20}$-alkyl, tri($C_1$ to $C_{20}$-alkyl)silyl, tri($C_1$ to $C_{20}$-alkyl)siloxy or $C_6$ to $C_{20}$-aryl substituents); or a bridge of 1 to 3, e.g. one or two, heteroatoms, such as silicon (Si), germanium (Ge) and/or oxygen (O) atom(s), e.g. $—SiR^1_2—$, wherein each $R^1$ is independently $C_1$ to $C_{20}$-alkyl, $C_4$ to $C_{12}$ cycloalkyl, $C_6$ to $C_{20}$-aryl or tri($C_1$ to $C_{20}$ alkyl)silyl-residue, such as trimethylsilyl-.

In a preferred embodiment the transition metal compound has the formula (II)

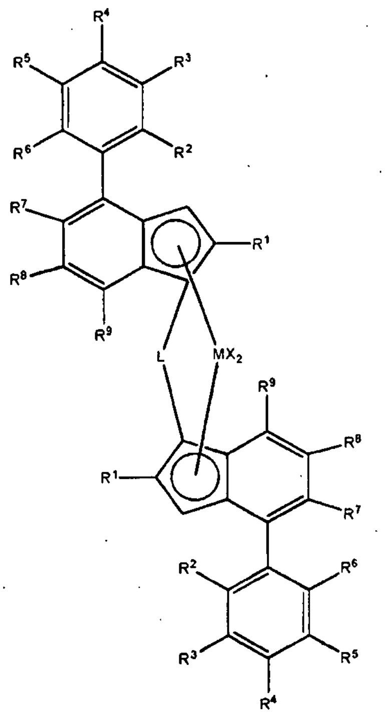

wherein

| | |
|---|---|
| M | is zirconium (Zr) or hafnium (Hf), preferably zirconium (Zr), |
| X | are ligands with a σ-bond to the metal "M", preferably those as defined above for formula (I), preferably hydrogen (H) or chlorine (Cl), the latter especially preferred, |
| $R^1$ | are equal to or different from each other, preferably equal, and are selected from the group consisting of linear saturated $C_1$-$C_{20}$ alkyl, linear unsaturated $C_1$-$C_{20}$ alkyl, branched saturated $C_1$-$C_{20}$ alkyl, branched unsaturated $C_1$-$C_{20}$ alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 13 to 16 of the Periodic Table (IUPAC), |
| $R^2$ to $R^6$ | are equal to or different from each other and are selected from the group consisting of hydrogen, linear saturated $C_1$-$C_{20}$ alkyl, linear unsaturated $C_1$-$C_{20}$ alkyl, branched saturated $C_1$-$C_{20}$ alkyl, branched unsaturated $C_1$-$C_{20}$ alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 13 to 16 of the Periodic Table (IUPAC), |
| $R^7$ and $R^8$ | are equal to or different from each other and selected from the group consisting of hydrogen, linear saturated $C_1$-$C_{20}$ alkyl, linear unsaturated $C_1$-$C_{20}$ alkyl, branched saturated $C_1$-$C_{20}$ alkyl, branched unsaturated $C_1$-$C_{20}$ alkyl, $C_3$-$C_{20}$ cycloalkyl, $C_6$-$C_{20}$ aryl, $C_7$-$C_{20}$ alkylaryl, $C_7$-$C_{20}$ arylalkyl, optionally containing one or more heteroatoms of groups 13 to 16 of the Periodic Table (IUPAC), $SiR^{10}_3$, $GeR^{10}_3$, $OR^{10}$, $SR^{10}$ and $NR^{10}_2$, wherein<br>$R^{10}$ is selected from the group consisting of linear saturated $C_1$-$C_{20}$ alkyl, linear unsaturated $C_1$-$C_{20}$ alkyl, branched saturated $C_1$-$C_{20}$ alkyl, branched unsaturated $C_1$-$C_{20}$ alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 13 to 16 of the Periodic Table (IUPAC),<br>and/or<br>$R^7$ and $R^8$ being optionally part of a $C_4$ to $C_{20}$ carbon ring system together with the indenyl carbons to which they are attached, optionally one carbon atom can be substituted by a nitrogen, sulfur or oxygen atom, |
| $R^9$ | are equal to or different from each other and are selected from the group consisting of hydrogen, linear saturated $C_1$-$C_{20}$ alkyl, linear unsaturated $C_1$-$C_{20}$ alkyl, branched saturated $C_1$-$C_{20}$ alkyl, branched unsaturated $C_1$-$C_{20}$ alkyl, $C_3$-$C_{20}$ cycloalkyl, $C_6$-$C_{20}$ aryl, $C_7$-$C_{20}$ alkylaryl, $C_7$-$C_{20}$ arylalkyl, $OR^{10}$, and $SR^{10}$, wherein<br>$R^{10}$ is defined as before |
| L | is a bivalent group bridging the two indenyl ligands, L being preferably a $C_2R_4$ unit or a $SiR_2$ or $GeR_2$, wherein R is selected from the group consisting of H, linear saturated $C_1$-$C_{20}$ alkyl, linear unsaturated $C_1$-$C_{20}$ alkyl, branched saturated $C_1$-$C_{20}$ alkyl, branched unsaturated $C_1$-$C_{20}$ alkyl, $C_3$-$C_{20}$ cycloalkyl, $C_6$-$C_{20}$ aryl, $C_7$-$C_{20}$ |

alkylaryl or $C_7$-$C_{20}$ arylalkyl, optionally containing one or more heteroatoms of groups 13 to 16 of the Periodic Table (IUPAC), preferably $Si(CH_3)_2$, $SiCH_3C_6H_{11}$, or $SiPh_2$,
wherein $C_6H_{11}$ is cyclohexyl.

Preferably the transition metal compound of formula (II)is $C_2$-symmetric or pseudo-$C_2$-symmetric. Concerning the definition of symmetry it is referred to Resconi et al. Chemical Reviews, 2000, Vol. 100, No. 4 1263 and references herein cited.

Preferably the residues $R^1$ are equal to or different from each other, more preferably equal, and are selected from the group consisting of linear saturated $C_1$-$C_{10}$ alkyl, linear unsaturated $C_1$-$C_{14}$ alkyl, branched saturated $C_1$-$C_{10}$ alkyl, branched unsaturated $C_1$-$C_{10}$ alkyl and $C_6$-$C_{12}$ aryl. Even more preferably the residues $R^1$ are equal to or different from each other, more preferably equal, and are selected from the group consisting of linear saturated $C_1$-$C_6$ alkyl, linear unsaturated $C_1$-$C_6$ alkyl, branched saturated $C_1$-$C_6$ alkyl, branched unsaturated $C_1$-$C_6$ alkyl and $C_6$-$C_{10}$ aryl. Yet more preferably the residues $R^1$ are equal to or different from each other, more preferably equal, and are selected from the group consisting of methyl, ethyl tert-butyl, and benzyl

Preferably the residues $R^2$ to $R^6$ are equal to or different from each other and linear saturated $C_1$-$C_4$ alkyl or branched saturated $C_1$-$C_4$ alkyl. Even more preferably the residues $R^2$ to $R^6$ are equal to or different from each other, more preferably equal, and are selected from the group consisting of methyl, ethyl, iso-propyl and tert-butyl.

Preferably the and $R^7$ and $R^8$ are equal to or different from each other and are selected from hydrogen and methyl.

In a preferred embodiment an organo-zirconium compound is racmethyl(cyclohexyl)silanediyl bis(2-methyl-4-(4-tert-butylphenyl)indenyl)zirconium dichloride.

Preferably the solid catalyst system (SCS) comprise a cocatalyst (Co) comprises an element (E) of group 13 of the periodic table (IUPAC), for instance the cocatalyst (Co) comprises a compound of Al.

Examples of such cocatalyst (Co) are organo aluminium compounds, such as aluminoxane compounds.

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid catalyst system only compounds of Al as cocatalyst (Co) are employed.

In particular preferred cocatalysts (Co) are the aluminoxanes, in particular the C1 to C10-alkylaluminoxanes, most particularly methylaluminoxane (MAO).

Preferably, the organo-zirconium compound of formula (I) and the cocatalyst (Co) of the solid catalyst system (SCS) represent at least 70 wt%, more preferably at least 80 wt%, even more preferably at least 90 wt%, even further preferably at least 95 wt% of the solid catalyst system. Thus it is appreciated that the solid catalyst system (SCS) is featured by the fact that it is self-supported, i.e. it does not comprise any catalytically inert support material, like for instance silica, alumina or $MgCl_2$ or porous polymeric material, which is otherwise commonly used in heterogeneous catalyst systems, i.e. the catalyst is not supported on external support or carrier material. As a consequence of that the solid catalyst system (SCS) is self-supported and it has a rather low surface area.

In one specific embodiment an solid catalyst system (SCS) is employed which is featured by rather low porosity. Accordingly the solid catalyst system (SCS) has preferably a porosity measured according ASTM 4641 of less than 1.40 ml/g and/or a surface area measured according to ASTM D 3663 of lower than 25 $m^2$/g.

Preferably the solid catalyst system (SCS) has a surface area of lower than 15 $m^2$/g, yet still lower than 10 $m^2$/g and most preferred lower than 5 $m^2$/g, which is the lowest measurement limit. The surface area according to this invention is measured according to ASTM D 3663 ($N_2$).

Alternatively or additionally it is appreciated that the solid catalyst system (SCS) has a porosity of less than 1.30 ml/g and more preferably less than 1.00 ml/g. The porosity has been measured according to ASTM 4641 ($N_2$). In another preferred embodiment the porosity is not detectable when determined with the method applied according to ASTM 4641 ($N_2$).

Furthermore the solid catalyst system (SCS) typically has a mean particle size of not more than 500 $\mu$m, i.e. preferably in the range of 2 to 500 $\mu$m, more preferably 5 to 200 $\mu$m. It is in particular preferred that the mean particle size is below 80 $\mu$m, still more preferably below 70 $\mu$m. A preferred range for the mean particle size is 5 to 70 $\mu$m, or even 10 to 60 $\mu$m.

The solid metallocene catalyst system (SCS) is preferably obtained by the emulsion solidification technology, the basic principles of which are described in WO 03/051934. This document is herewith included in its entirety by reference.

Hence the solid catalyst system (SCS) is preferably in the form of solid catalyst particles, obtainable by a process comprising the steps of

a) preparing a solution of one or more catalyst components;

b) dispersing said solution in a second solvent to form an emulsion in which said one or more catalyst components are present in the droplets of the dispersed phase,

c) solidifying said dispersed phase to convert said droplets to solid particles and optionally recovering said particles to obtain said catalyst.

Preferably a first solvent, more preferably a first organic solvent, is used to form said solution. Still more preferably the organic solvent is selected from the group consisting of a linear alkane, cyclic alkane, aromatic hydrocarbon and halogen-containing hydrocarbon. Moreover the second solvent forming the continuous phase is an inert solvent towards to catalyst components, The second solvent might be immiscible towards the solution of the catalyst components at least under the conditions (like temperature) during the dispersing step. The term "immiscible with the catalyst solution" means that the second solvent (continuous phase) is fully immiscible or partly immiscible i.e. not fully miscible with the dispersed phase solution.

Preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or - cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or perfluoro (1,3- dimethylcyclohexane or a mixture thereof.

Furthermore it is preferred that the emulsion comprising said continuous phase and said dispersed phase is a bi-or multiphasic system as known in the art. An emulsifier may be used for forming and stabilising the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated C1-n (suitably C4-30-or C5-15) alcohol (e.g. highly fluorinated heptanol, octanol or nonanol), oxide (e.g. propenoxide) or acrylate ester which reacts e.g. with a cocatalyst component, such as aluminoxane to form the "actual" surfactant.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934.

All or part of the preparation steps can be done in a continuous manner. Reference is made to WO 2006/069733 describing principles of such a continuous or semicontinuous preparation methods of the solid catalyst types, prepared via emulsion/solidification method.

The above described catalyst components are prepared according to the methods described in WO 01/48034.

The above process enables very feasible means for obtaining the reactor-made polypropylene (PP).

The high melt strength polypropylene (HMS-PP) is preferably obtained by a process as described in EP 0 879 830 A1 and EP 0 890 612 A2. Both documents are herewith included by reference. Accordingly the high melt strength polypropylene (HMS-PP) is produced by

(a) mixing

(i) a unmodified propylene homopolymer and/or copolymer (A) as defined above, preferably a unmodified propylene homopolymer with a weight average molecular weight ($M_w$) of 500,000 to 1,500,000 g/mol,

(ii) from 0.05 to 3 wt.-% based on the components of (i) and (ii), of a peroxide selected from the group consisting of acyl peroxide, alkyl peroxide, hydroperoxide, perester and peroxycarbonate, and

(iii) optionally diluted with inert solvents,

(b) heating to 30 to 100 °C, preferably to 60 to 90 °C,

(c) sorption of volatile bifunctional monomers, preferably ethylenically unsaturated, multifunctional monomers, like $C_4$ to $C_{10}$ dienes and/or $C_7$ to $C_{10}$ divinyl compounds, by the unmodified propylene homopolymer and/or copolymer

(A), preferably unmodified propylene homopolymer (A), from the gas phase at a temperature of from 20 to 120 °C, preferably of from 60 to 100 °C, where the amount of the absorbed bifunctionally unsaturated monomers is from 0.01 to 10.00 wt.-%, preferably from 0.05 to 2.00 wt.-%, based on the propylene homopolymer (A),
(d) heating and melting the polypropylene composition in an atmosphere comprising inert gas and/or the volatile bifunctional monomers, from sorption temperature to 210 °C, whereupon the free-radical generators are decomposed and then
(e) heating the melt up to 280 °C in order to remove unreacted monomers and decomposition products, and
(f) agglomerating the melt.

The process for producing the high melt strength polypropylene (HMS-PP) preferably is a continuous method, performed in continuous reactors, mixers, kneaders and extruders. Batchwise production of the high melt strength polypropylene (HMS-PP), however is feasible as well.

Practical sorption times $\tau$ of the volatile bifunctional monomers range from 10 to 1000 s, where sorption times $\tau$ of 60 to 600 are preferred.

The present invention will now be described in further detail by the following examples.

## EXAMPLES

The following definitions of terms and determination of methods apply for the above general description of the invention as well as to the below examples unless otherwise defined.

### Quantification of microstructure by NMR spectroscopy

Quantitative nuclear-magnetic resonance (NMR) spectroscopy was used to quantify the isotacticity, regio-regularity and comonomer content of the polymers.

Quantitative $^{13}C$ {$^{1}H$} NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra

For ethylene-propylene copolymers approximately 200 mg of material was dissolved in 3 ml of *1,2*-tetrachloroethane-*d2* (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme(Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 6144 (6k) transients were acquired per spectra.

Quantitative $^{13}C${$^{1}H$} NMR spectra were processed, integrated and relevant quantitative properties determined from the integrals using proprietary computer programs.

For ethylene-propylene copolymers all chemical shifts were indirectly referenced to the central methylene group of the ethylene block (EEE) at 30.00 ppm using the chemical shift of the solvent. This approach allowed comparable referencing even when this structural unit was not present.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33(2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (\,mmmm\ /\ \text{sum of all pentads}\,)$$

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\,I_{e6} + I_{e8}\,) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\,mol\% = 100 * (\,P_{21e} / P_{total}\,)$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The mole fraction of ethylene in the polymer was quantified using the method of Wang et. al. (Wang, W-J., Zhu, S., Macromolecules 33 (2000), 1157) through integration of multiple signals across the whole spectral region of a $^{13}C\{^{1}H\}$ spectra acquired using defined conditions. This method was chosen for its accuracy, robust nature and ability to account for the presence of regio-defects when needed. Integral regions were slightly adjusted to increase applicability to a wider range of comonomer contents.

The mole percent comonomer incorporation in the polymer was calculated from the mole fraction according to:

$$E\,[mol\%] = 100 * fE$$

The weight percent comonomer incorporation in the polymer was calculated from the mole fraction according to:

$$E\ [wt\%] = 100 * ( fE * 28.05 ) / ( (fE * 28.05) + ((1-fE) * 42.08) )$$

The comonomer sequence distribution at the triad level was determined using the method of Kakugo et al. (Kakugo, M., Naito, Y., Mizunuma, K., Miyatake, T. Macromolecules 15 (1982) 1150) through integration of multiple signals across the whole spectral region of a $^{13}C\{^{1}H\}$ spectra acquired using defined conditions. This method was chosen for its robust nature. Integral regions were slightly adjusted to increase applicability to a wider range of comonomer contents.

The mole percent of a given comonomer triad sequence in the polymer was calculated from the mole fraction determined by the method of Kakugo et at. (Kakugo, M., Naito, Y., Mizunuma, K., Miyatake, T. Macromolecules 15 (1982) 1150) according to: XXX [mol%] = 100 * fXXX

The mole fraction comonomer incorporation in the polymer, as determined from the comonomer sequence distribution at the triad level, were calculated from the triad distribution using known necessary relationships (Randall, J. Macromol. Sci., Rev. Macromol. Chem. Phys. 1989, C29, 201):

$$fXEX = fEEE + fPEE + fPEP$$

$$fXPX = fPPP + fEPP + fEPE$$

where PEE and EPP represents the sum of the reversible sequences PEE/EEP and EPP/PPE respectively.

The randomness of the comonomer distribution was quantified as the relative amount of isolated ethylene sequences as compared to all incorporated ethylene. The randomness was calculated from the triad sequence distribution using the relationship:

$$R(E)\ [\%] = 100 * ( fPEP / fXEX )$$

**Molecular weight averages, molecular weight distribution, branching index (Mn, Mw, MWD, g') determined by SEC/VISC-LS**

Molecular weight averages (Mw, Mn), molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4 2003. A PL 220 (Polymer Laboratories) GPC equipped with a refractive index (RI), an online four capillary bridge viscometer (PL-BV 400-HT), and a dual light scattering detector (PL-LS 15/90 light scattering detector) with a 15° and 90° angle was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 μL of sample solution were injected per analysis. The corresponding detector constants as well as the inter detector delay volumes were determined with a narrow PS standard (MWD = 1.01) with a molar mass of 132900 g/mol and a viscosity of 0.4789 dl/g. The corresponding dn/dc for the used PS standard in TCB is 0,053 $cm^3/g$.

The molar mass at each elution slice was determined by light scattering using a combination of two angels 15° and 90°. All data processing and calculation was performed using the Cirrus Multi-Offline SEC-Software Version 3.2 (Polymer Laboratories a Varian inc. Company). The molecular weight was calculated using the option in the Cirrus software "use combination of LS angles" in the field "sample calculation options subfield slice MW data from".

The data processing is described in details in G. Saunders, P. A. G: Cormack, S. Graham; D. C. Sherrington, Macromolecules, 2005, 38, 6418-6422. Therein the $Mw_i$ at each slice is determined by the 90° angle by the following equation:

$$Mw_i = \frac{K_{LS} * R(\theta)^{90°}}{\frac{dn}{dc} * R * P(\theta)}$$

The Rayleigh ratio $R(\theta)^{90°}$ of the 90° angle is measured by the LS detector and R is the response of the RI-detector. The particle scatter function $P(\theta)$ is determined by the usage of both angles (15° and 90°) as described by C. Jackson and H. G. Barth(C. Jackson and H. G. Barth, "Molecular Weight Sensitive Detectors" in Handbook of Size Exclusion Chromatography and related techniques, C.-S. Wu, 2nd ed., Marcel Dekker, New York, 2004, p.103). For the low and high molecular region in which less signal of the LS detector or RI detector respectively was achieved a linear fit was used to correlate the elution volume to the corresponding molecular weight.

The dn/dc used in the equation is calculated from the detector constant of the RI detector, the concentration c of the sample and the area of the detector response of the analysed sample. The relative amount of branching is determined using the g'-index of the branched polymer sample. The long chain branching (LCB) index is defined as g'= $[\eta]_{br}/[\eta]_{1in}$. It is well known if the g' value increases the branching content decreases. $[\eta]$ is the intrinsic viscosity at 160 °C in trichloorbenzene of the polymer sample at a certain molecular weight and is measured by an online viscosity and a concentration detector. The intrinsic viscosities were measured as described in the handbook of the Cirrus Multi-Offline SEC-Software Version 3.2 with use of the Solomon-Gatesman equation.

The necessary concentration of each elution slice is determined by a RI detector.

$[\eta]_{1in}$ is the intrinsic viscosity of a linear sample and $[\eta]_{br}$ the viscosity of a branched sample of the same molecular weight and chemical composition. The number average of $g'_n$ and the weight average $g'_w$ are defined as:

$$g'_n = \frac{\sum_0^i a_i * \frac{[\eta]_{br,i}}{[\eta]_{lin,i}}}{\sum a_i}$$

$$g'_w = \frac{\sum_0^i A_i * \frac{[\eta]_{br,i}}{[\eta]_{lin,i}}}{\sum_0^i A_i * \left(\frac{[\eta]_{br,i}}{[\eta]_{lin,i}}\right)^2}$$

where $a_i$ is dW/dlogM of fraction i and $A_i$ is the cumulative dW/dlogM of the polymer up to fraction i. The $[\eta]_{1in}$ of the linear reference (linear isotactic PP) over the molecular weight was measured with an online viscosity detector. Following K and $\alpha$ values were obtained (K = 30.68*$10^{-3}$ and $\alpha$ = 0.681) from the linear reference in the molecular weight range of logM= 4.5-6.1. The $[\eta]_{lin}$ per slice molecular weight for the g' calculations was calculated by following relationship $[\eta]_{lin,i} = K*M_i^{\alpha}$. $[\eta]_{br,i}$ was measured for each particular sample by online viscosity and concentration detector.

**Stepwise Isothermal Segregation Technique (SIST)**

The isothermal crystallisation for SIST analysis was performed in a Mettler TA820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C

(xi) held for 2 hours at 105 °C.

After the last step the sample was cooled down with 80 C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of 50 to 60 °C; 60 to 70 °C; 70 to 80 °C; 80 to 90 °C; 90 to 100 °C; 100 to 110 °C; 110 to 120 °C; 120 to 130 °C; 130 to 140 °C; 140 to 150 °C; 150 to 160 °C; 160 to 170 °C; 170 to 180 °C; 180 to 190 °C; 190 to 200 °C.

**Melting temperature Tm, crystallization temperature Tc, and the degree of Crystallinity:** measured with Mettler TA820 differential scanning calorimetry (DSC) according to ISO 3146 on 5-10 mg samples. Both crystallization and melting curves were obtained during 10 °C/min cooling and heating scans between 30 °C and 225 °C. Melting and crystallization temperatures were taken as the peaks of endotherms and exotherms. **$MFR_2$ (230°C)** is measured according to ISO 1133 (230 °C, 2.16 kg load)

Intrinsic viscosity is measured according to DIN ISO 1628/1, October 1999 (in Decalin at 135 °C).

### Xylene cold soluble fraction (XCS wt.-%) and xylene cold insoluble faction (XCI wt.-%)

The xylene cold soluble fraction (XCS) is determined at 23 °C according to ISO 6427. The fraction insoluble under such condistions is specified as xylene cold insoluble faction (XCI). **The gel content** is assumed to be identical to the xylene hot insoluble (XHI) fraction, which is determined by extracting 1 g of finely cut polymer sample with 350 ml xylene in a Soxhlet extractor for 48 hours at the boiling temperature. The remaining solid amount is dried at 90°C and weighed for determining the insolubles amount.

### Strain hardening behaviour (melt strength):

The strain hardening behaviour is determined by the method as described in the article "Rheotens-Mastercurves and Drawability of Polymer Melts", M. H. Wagner, Polymer Engineering and Science, MID-APRIL ISW, Vol. 36, NO. 7, pages 925 to 935. The content of the document is included by reference.

For detailed explanation of the measuring method it is also referred to the figure 1.

Figure 1 shows a schematic representation of the experimental procedure which is used to determine strain hardening.

The strain hardening behaviour of polymers is analysed by Rheotens apparatus (1) (product of Göttfert, Siemensstr.2, 74711 Buchen, Germany) in which a melt strand (2) is elongated by drawing down with a defined acceleration. The haul-off force F in dependence of draw-down velocity v is recorded.

The test procedure is performed in a standard climatized room with controlled room temperature of 23 °C and 30 bar. The Rheotens apparatus (1) is combined with an extruder/melt pump (3) for continuous feeding of the melt strand (2). The extrusion temperature is 200 °C; a capillary die with a diameter of 2 mm and a length of 6 mm is used. The strength length between the capillary die and the Rheotens wheels is 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions.The acceleration of the melt strand (2) drawn down is 120 $mm/sec^2$.

The Rheotens was operated in combination with the PC program EXTENS. This is a real-time data-acquisition program, which displays and stores the measured data of tensile force and drawdown speed.

The schematic diagram in figure 1 shows in an exemplary fashion the measured increase in haul-off force F (i.e. "melt strength") versus the increase in draw-down velocity v (i.e. "drawability").

### Elementary Analysis

The below described elementary analysis is used for determining the content of elementary residues which are mainly originating from the catalyst, especially the Al-, B-, and Si-residues in the polymer. Said Al-, B- and Si-residues can be in any form, e.g. in elementary or ionic form, which can be recovered and detected from polypropylene using the below described ICP-method. The method can also be used for determining the Ti-content of the polymer.

### ICP-Spectrometry (Inductively Coupled Plasma Emission)

ICP-instrument: The instrument for determination of Al-, B- and Si-content is ICP Optima 2000 DV, PSN 620785 (supplier Perkin Elmer Instruments, Belgium) with software of the instrument.

Detection limits are 0.10 ppm (Al), 0.10 ppm (B), 0.10 ppm (Si).

The polymer sample was first ashed in a known manner, then dissolved in an appropriate acidic solvent. The dilutions of the standards for the calibration curve are dissolved in the same solvent as the sample and the concentrations chosen so that the concentration of the sample would fall within the standard calibration curve.

**ppm:** means parts per million by weight

**Ash content:** Ash content is measured according to ISO 3451-1 (1997) standard.

**Chlorine residues content:** The content of Cl-residues is measured from samples in the known manner using X-ray fluorescence (XRF) spectrometry. The instrument was X-ray fluorescention Philips PW2400, PSN 620487, (Supplier: Philips, Belgium) software X47. Detection limit for Cl is 1 ppm.

**Dielectric Properties (Dielectric loss tangent (tan δ)):**

The compositions have been compression moulded at 200 °C in a frame to yield plates of 4 mm thickness, 80 mm width and 80 mm length. The pressure has been adjusted high enough to obtain a smooth surface of the plates. A visual inspection of the plates showed no inclusions such as trapped air or any other visible contamination.

Characterization of the plaques for dielectric properties:

For the measurement of the dielectric constant and the dielectric loss tangent (tan δ) of the materials, a split-post dielectric resonator has been used. The technique measures the complex permittivity of dielectric laminar specimen (plaques) in the frequency range from 1 - 10 GHz. Its geometry is shown in Figure 4.

The test is conducted at 23 °C.

The split-post dielectric resonator (SPDR) was developed by Krupka and his collaborators [see: J Krupka, R G Geyer, J Baker-Jarvis and J Ceremuga, 'Measurements of the complex permittivity of microwave circuit board substrates using a split dielectric resonator and reentrant cavity techniques', Proceedings of the Conference on Dielectric Materials, Measurements and Applications - DMMA '96, Bath, UK, published by the IEE, London, 1996.].

Two identical dielectric resonators are placed coaxially along the z-axis so that there is a small laminar gap between them into which the specimen can be placed to be measured. By choosing suitable dielectric materials the resonant frequency and Q-factor of the SPDR can be made to be temperature stable. Once a resonator is fully characterized, only three parameters need to be measured to determine the complex permittivity of the specimen: its thickness and the changes in resonant frequency, Δf, and in the Q-factor, ΔQ, obtained when it is placed in the resonator.

Specimens of 4 mm thickness have been prepared by compression moulding as described above and measured at a high frequency of 1.9 GHz.

A comprehensive review of the method is found in J Krupka, R N Clarke, O C Rochard and A P Gregory, 'Split-Post Dielectric Resonator technique for precise measurements of laminar dielectric specimens - measurement uncertainties', Proceedings of the XIII Int. Conference MIKON'2000, Wroclaw, Poland, pp 305 - 308, 2000.

Attenuation:

For pair cables the dependence of the attenuation "a on the dielectric loss factor tan δ is outlined:

**The attenuation "a"** calculates from constants A and B, from the distance between the wires in a pair 2s, from the conductor diameter d, from the frequency f, the dielectric constant ε and the dielectric loss factor δ according to:

$$a = A\left(\frac{1}{d\,log\left(\frac{2s}{d}\right)}\right)\sqrt{f}\sqrt{\varepsilon} + Bf\,tan\,\delta\sqrt{\varepsilon}$$

A foamed insulation layer has a lower dielectric constant. The density of foam is dependent on the density of the pure, unfoamed, solid material and the achieved degree of expansion. The dielectric constant can be derived from the density of the foam (the more expansion, the lower the foam density, thus the lower the dielectric constant). The lower the density p of the foam, the less the dielectric constant according to

$$\varepsilon_{Foam} = a \cdot \rho_{Foam} + b$$

Further information on the concept of attenuation can be found in Standard IEC 61156-7 which specifies a calculation method for the attenuation

Permittivity: Permittivity is measured by the same method as described for dielectric loss tangent

**Preparation of examples**

**Table 1:**

| | | CE 1 | CE 2 | CE 3 | CE 4 | CE 5 | CE 4 |
|---|---|---|---|---|---|---|---|
| PP | [wt.-%] | 100 | 99.5225 | 99.7625 | 99.4725 | 99.4625 | 99.4225 |
| CaSt | [wt.-%] | | | 0.0075 | 0.0075 | 0.0075 | 0.0075 |
| ZnSt | [wt.-%] | | 0.0075 | | | | |
| Pho-A 1 | [wt.-%] | | | | | | |
| Pho-A 2 | [wt.-%] | | | | | | |
| Other-A 1 | [wt.-%] | | | | 0.05 | | |
| Other-A 2 | [wt.-%] | | | | | 0.03 | |
| Other-A 3 | [wt.-%] | | | | | | 0.1 |
| Phe-A 1 | [wt.-%] | | 0.47 | 0.23 | 0.47 | 0.47 | 0.47 |
| Phe-A 2 | [wt.-%] | | | | | | |
| HALS | [wt.-%] | | | | | | |
| tan δ (1.9 GHz) | x $10^{-6}$ | 56.1 | 129.1 | 88.0 | 144.5 | 157.3 | 148.5 |
| Permittivity | | 2230 | 2256 | 2244 | 2250 | 2249 | 2249 |
| MFR | [g/10min] | 5.58 | 3.35 | 3.44 | 2.88 | 3.38 | 3.13 |
| MWD | | 4.5 | 4.5 | 4.5 | 4.5 | 4.5 | 4.5 |
| <2,1>* | [mol-%] | 0.88 | | | | | |
| ash | [ppm] | 42 | - | - | - | - | - |
| Si | [wt.-%] | 0 | - | - | - | - | - |
| * <2,1> regiodefects | | | | | | | |

**Table 2:**

| | | CE 5 | CE 6 | E1 | E2 | E3 | E3 |
|---|---|---|---|---|---|---|---|
| PP | [wt.-%] | 99.5225 | 99.4225 | 99.5225 | 99.4225 | 99.3225 | 99.4225 |
| CaSt | [wt.-%] | 0.0075 | | 0.0075 | 0.0075 | 0.0075 | 0.0075 |
| ZnSt | [wt.-%] | | 0.0075 | | | | |
| Pho-A1 | [wt.-%] | | | | 0.1 | 0.2 | 0.1 |
| Pho-A 2 | [wt.-%] | | | | | | |
| Other-A 1 | [wt.-%] | | | | | | |
| Other-A 2 | [wt.-%] | | | | | | |
| Other-A 3 | [wt.-%] | | | | | | |
| Phe-A 1 | [wt.-%] | | 0.47 | 0.47 | 0.47 | 0.47 | 0.47 |

(continued)

| | | CE 5 | CE 6 | E1 | E2 | E3 | E3 |
|---|---|---|---|---|---|---|---|
| Phe-A 2 | [wt.-%] | 0.47 | | | | | |
| HALS | [wt.-%] | | 0.1 | | | | |
| tan δ (1.9 GHz) | x $10^{-6}$ | 130.4 | 142.5 | 121.6 | 105.3 | 105.3 | 114.2 |
| Permittivity | | 2250 | 2244 | 2241 | 2255 | 2254 | 2253 |
| MFR | [g/10min] | 3.22 | 3.27 | 3.21 | 2.76 | 2.69 | 2.83 |
| MWD | | 4.5 | 4.5 | 4.5 | 4.5 | 4.5 | 4.5 |

PP is a propylene homopolymer having a xylene soluble content of 0.9 wt. -%, melting point Tm of 153.2, Tc of 112.6°C, $MFR_2$ (230 °C) of 3.5 g/10min and a MWD of 4.5, g' of 0.98; SIST data can be taken from figure 2 and table 4;
CaSt is calcium stearate of Faci
ZnSt is zinc stearate of Faci
Pho-A 1 is tris (2,4-di-tert-butylphenyl)-phosphite "Irgafos 168" of Ciba Speciality Chemical
Pho-A 2 is bis(2,4-dicumylphenyl)pentaerythritol diphosphite "Doverphos S-9228" of Dover Chemical
Other-A 1 is 2,5,7,8-tetramethyl-2(4',8',12'-trimethyltridecyl)chroman-6-ol "Irganox E 201" of Ciba Speciality Chemicals
Other-A 2 is bis(Hydrogenated tallow alkyl) amines, oxidised "Irgastab FS 042" of Ciba Speciality Chemicals
Other-A 3 is 2,6-di-tert. butyl -4-methyl phenol "Vulkanox BHT" of Lanxess
Phe-A 1 is pentaerythrityl-tetrakis(3-(3',5'-di-tert. butyl-4-hydroxyphenyl)-propionate "Irganox 1010" of Ciba Speciality Chemicals
Phe-A 2 is 1,3,5-tri-methyl-2,4,6-tris-(3,5-di-tert. butyl-4-hydroxyphenyl) benzene "Irganox 1330" of Ciba Speciality Chemicals
HALS is poly((6-((1,1,3,3-tetramethylbutyl)amino)-1,3,5-triazine-2,4-diyl)(2,2,6,6-tetramethyl-4-piperidyl)imino)-1,6-hexanediyl ((2,2,6,6-tetramethyl-4-piperidyl)imino)) "Chimassorb 944" of Ciba Speciality Chemicals

The polypropylene homopolymer (PP) has been produced as follows:

The used catalyst was prepared according to example 5 of WO 03/051934 wherein the catalyst used therein was replaced by rac-methyl(cyclohexyl)silanediyl bis(2-methyl-4-(4-tert-butylphenyl)indenyl)zirconium dichloride. Rac-methyl(cyclohexyl)silanediyl bis(2-methyl-4-(4-tert-butylphenyl)indenyl)zirconium dichloride was prepared according to WO 2005 105863 A2, examples 17-18.

Catalyst preparation

In a jacketed 90 $dm^3$ glasslined stainless steel reactor the complex solution was prepared at - 5°C adding 0,85 kg of a 24,5 wt% ((2,2,3,3,4,4,5,5,6,6,7,7,8,8,9,9,9-heptadecafluorononyl)oxirane)/toluene solution very slowly (3.4 ml/min) to 13,5 kg 30wt% MAO(methylaluminoxane)/toluene solution. The temperature was increased to 25°C and the solution was stirred for 60 minutes. After addition of 210 g of the complex the solution was stirred for an additional two hours. That mixture was pumped at 5 1/h to the rotor stator with the rotor stator pair 4M. In the rotor stator with a tip speed of 4 m/s the mixture was mixed with a flow of 321/h of hexadecafluoro-1,3-dimethylcyclohexane thus forming an emulsion. The droplets in the emulsion were solidified by an excess flow of 4501/h hexadecafluoro-1,3-dimethylcyclohexane at a temperature of 76°C in a Teflon hose. The hose was connected to a jacketed 160 $dm^3$ stainless steel reactor equipped with a helical mixing element. In this reactor the catalyst particles were separated from the hexadecafluoro-1,3-dimethylcyclohexane by density difference. After the complex solution had been utilised the catalyst particles were dried in the 160 $dm^3$ reactor at a temperature of 70°C and a nitrogen flow of 5 kg/h for 7 h.

Porosity and surface area below the detection limit.

| | |
|---|---|
| mol ratio Co/M (Al/Zr): | 260 mol/mol |
| Mean particle size: | 26 μm |
| Zr content: | 0.53 wt-% |

(continued)

| | |
|---|---|
| Al content: | 34.5 wt-% |

The polypropylene homopolymer was produced employing above mentioned catalyst in a continuous two step polymerization process consisting of a bulk polymerization process (loop reactor) and a gas phase polymerization step. Prior to entering the bulk polymerization step, the catalyst is pre-polymerized in a loop-type pre polymerization reactor. Hydrogen levels in the pre polymerization reactor, in the loop reactor and the gas phase reactors were different respectively and adjusted so that the molecular weight (MFR) of the polymer from the first polymerization step was different from the molecular weight (MFR) of the polymer from the second polymerization step. The weight fraction of loop product (split) can be varied between 30 and 70 wt%. Temperature in the prepolymerisation reactor was 35 °C, in the loop reactor 75 °C, and in the gas phase reactors 85 °C: pressure in the prepolymerisation and in the loop reactor 53 bar, and in the gas phase 30 bar. The splits and other process parameters used for creating the propylene homopolymer are given in table 1.

**Table 3:** Preparation of the propylene homopolymer

| | | **PP** |
|---|---|---|
| Split; loop-fraction | [wt%] | 64 |
| **prepolymerisation** | | |
| Catalyst feed | [g/h] | 1.65 |
| Hydrogen feed | [g/h] | 0.48 |
| Residence time | [h] | 0.43 |
| **Loop reactor** | | |
| Propylene feed | [kg/h] | 147 |
| H2/C3 | [mol/kmol] | 0.07 |
| Production rate | [kg/h] | 31 |
| $MFR_2$ | [g/10min] | 0.7 |
| **1.GPR** | | |
| Propylene feed | [kg/h] | 65 |
| Production rate | [kg/h] | 24 |
| $MFR_2$* | [g/10min] | 50 |
| split | [wt%] | 36 |
| MFRtotal (pellets) | [g/10min] | 3.2 |
| * LG(1/MFR1)*wf1 + LG(1/MFR2)*wf-2 = LG(1/MFRtotal), wherein MFR1 is the $MFR_2$ of the polypropylene produced in the loop reactor MFR2 is the calculated $MFR_2$ of the polypropylene produced in the 1 GPR und MFRtotal is the $MFR_2$ measured for the polypropylene composition obtained in the 1GPR | | |

**Table 4:** SIST data of the polypropylene homopolymer

| Range (°C) | Fraction (wt.-%) |
|---|---|
| 50 - 60 | 0.09 |
| 60 - 70 | 0.29 |
| 70 - 80 | 0.54 |

(continued)

| Range (°C) | Fraction (wt.-%) |
|---|---|
| 80 - 90 | 0.83 |
| 90 - 100 | 1.08 |
| 100 - 110 | 1.20 |
| 110 - 120 | 2.41 |
| 120 - 130 | 5.10 |
| 130 - 140 | 15.97 |
| 140 - 150 | 32.84 |
| 150 - 160 | 33.98 |
| 160 - 170 | 5.71 |
| 170 - 180 | 0.00 |

## Claims

**1.** Communication cable comprising a conductor and a dielectric layer, said dielectric layer comprises a composition (A) comprising

(a) a polypropylene (PP), wherein the polypropylene (PP) has <2,1> erythro regiodefects of more than 0.1 mol.% determined by $^{13}C$-NMR spectroscopy
and
(b) a phosphorous antioxidant (Pho-A) and/or a salt of a fatty acid (S-FA), the cation of the salt of a fatty acid (S-FA) is selected from group 2 of the periodic table, preferably the salt of a fatty acid (S-FA) is calcium stearate (Ca-S).

**2.** Communication cable according to claim 1, wherein

(a) the polypropylene (PP) is a propylene homopolymer (H-PP) or a random propylene copolymer (R-PP),
and/or
(b) the dielectric layer comprises at least 85 wt.-% of the composition (A),
and/or
(c) the composition (A) is foamed.

**3.** Communication cable according to any one of the preceding claims, wherein the polypropylene (PP) has

(a) a melting temperature ($T_m$) measured by differential scanning calorimetry (DSC) of at least 120.0 °C.
and/or
(b) an ash content below 100 ppm,
and/or
(c) a xylene cold soluble fraction (XCS) of equal or below 8.0 wt.-%.

**4.** Communication cable according to any one of the preceding claims, wherein the polypropylene (PP) has

(a) less tan 15.0 wt-% of a crystalline fraction melting in a stepwise isothermal segregation technique analysis (SIST) above 160°C
and/or
(b) a molecular weight distribution (MWD) measured according to ISO 16014 of at least 2.8,
and/or
(c) a melt flow rate $MFR_2$ (230 °C) measured according to ISO 1133 of equal or more than 0.5 g/10min.

**5.** Communication cable according to any one of the preceding claims, wherein the polypropylene (PP) has a branching index g' of above 0.9,

**6.** Communication cable according to any one of the preceding claims, wherein the composition (A) comprises additionally

(a) a high melt strength polypropylene (HMS-PP), said high melt strength polypropylene (HMS-PP) being chemically different to the polypropylene (PP),
and/or
(b) an elastomeric propylene copolymer (EP).

**7.** Composition (A)
comprising

($a_1$) a polypropylene (PP), wherein the polypropylene (PP) has <2,1> erythro regiodefects of more than 0.1 md.-% determined by $^{13}C$-NMR spectroscopy and,
($b_1$) a phosphorous anti oxidant (Pho-A) and/or a salt of a fatty acid (S-FA), the cation of the salt of a fatty acid (S-FA) is selected from group 2 of the periodic table, preferably the salt of a fatty and (S-FA) is calcium stearate, and additionally has
($a_2$) a high melt strength polypropylene (HMS-PP), said high melt strenght polypropylene being chemically different to the polypropylene (PP), and/or
($b_2$) an elastomeric propylene copolymer (EP),

wherein the high melt strength polypropylene (HMS-PP) has

(a) a branching index g' of equal or below 0.9,
and/or
(b) a strain hardening behavior with a haul-off force $F_{max}$ of at least 10.0 cN and a draw down velocity $v_{max}$ of at least 200 mm/s,
and/or
(c) an xylene hot insoluble fraction (XHI) of not more than 1.0 wt.-%,
and/or
(d) a melt flow rate $MFR_2$ (230 °C) of 1.0 to 10.0 g/10min.

**8.** Communication cable according to any one of the preceding claims, wherein the composition (A) comprises additionally (a) phenolic antioxidant(s) (Phe-A) being no phosphorous antioxidant (Pho-A).

**9.** Communication cable according to any one of the preceding claims, wherein the composition (A) comprises

(a) at least 30 wt.-% of the polypropylene (PP),
(b1) optionally at least 10 wt.-% of the elastomeric propylene copolymer (EP), and/or
(b2) optionally at least 10 wt.-% of the high melt strength polypropylene (HMS-PP),
and wherein the composition (A) comprises further
(c1) 1 to 3,000 ppm of (a) phosphorous antioxidant(s) (Pho-A), and/or
(c2) 1 to 200 ppm of (a) salt(s) of a fatty acid(s) (S-FA), preferably of calcium stearate (Ca-S), and
(c3) optionally below 5,000 ppm (a) phenolic antioxidant(s) (Phe-A) being no phosphorous antioxidant(s) (Pho-A),

based on the composition (A).

**10.** Communication cable according to any one of the preceding claims, wherein

(i) the phosphorous antioxidant (Pho-A) is an organophosphite, preferably is either tris(2,4-di-t-butylphenyl)phosphite or bis(2,4-dicumylphenyl)pentaerythritol diphosphite,
and/or
(ii) the phenolic antioxidant (Phe-A) is a sterically hindered phenolic antioxidant, preferably a phenolic antioxidant comprising the residue of formula (I)

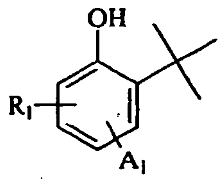

(I)

wherein
$R_1$ being located at the ortho- or meta-position to the hydroxyl-group and $R_1$ is $(CH_3)_3C$-, $CH_3$- or H, preferably $(CH_3)_3C$-, and
$A_1$ constitutes the remaining part of the phenolic antioxidant (Phe-A).

**11.** Communication cable according to any one of the preceding claims, wherein

(i) the polypropylene (PP) and optionally the elastomeric propylene copolymer (EP) and/or the high melt strength polypropylene (HMS-PP) is/are the only polymer(s) within the composition,
and/or
(ii) the composition does not contain zinc-stearate,
and/or
(iii) the composition does not contain an hindered amine stabilizer (HALS).

**12.** Communication cable according to any one of the preceding claims, wherein the dielectric layer has a dissipation factor tan 8 of equal or below 120 x $10^{-6}$ at 1.9 GHz.

**13.** Communication cable according to any one of the preceding claims, wherein the communication cable is a coaxial or triaxial cable.

**14.** Use of a phosphorous antioxidant (Pho-A) and/or a salt of a fatty acid (S-FA), the cation of the salt of a fatty acid (S-FA) is selected from group 2 of the periodic table, preferably the salt of a fatty acid (S-FA) is calcium stearate (Ca-S), to keep the dissipation factor tan $\delta$ of a composition comprising a polypropylene (PP), as defined in the claims 1 to 6, and the phosphorous antioxidant (Pho-A) and/or the salt of a fatty acid (S-FA), equal or below 120 x $10^{-6}$ at 1.9 GHz.

**Patentansprüche**

**1.** Kommunikationskabel, umfassend einen Leiter und eine dielektrische Schicht, wobei die dielektrische Schicht eine Zusammensetzung (A) umfasst, umfassend

(a) ein Polypropylen (PP), wobei das Polypropylen (PP) <2,1> Erythro-Regiodefekte von mehr als 0,1 Mol-%, bestimmt durch $^{13}C$-NMR-Spektroskopie, aufweist,
und
(b) ein Phosphor-Antioxidans (Pho-A) und/oder ein Salz einer Fettsäure (S-FA), wobei das Kation des Salzes einer Fettsäure (S-FA) aus der Gruppe 2 des Periodensystems ausgewählt ist, vorzugsweise ist das Salz einer Fettsäure (S-FA) Calciumstearat (Ca-S).

**2.** Kommunikationskabel nach Anspruch 1, wobei

(a) das Polypropylen (PP) ein Propylen-Homopolymer (H-PP) oder ein statistisches Propylen-Copolymer (R-PP) ist,
und/oder
(b) die dielektrische Schicht mindestens 85 Gew.-% der Zusammensetzung (A) umfasst,
und/oder
(c) die Zusammensetzung (A) geschäumt ist.

**3.** Kommunikationskabel nach einem der vorangehenden Ansprüche, wobei das Polypropylen (PP) aufweist

(a) eine Schmelztemperatur ($T_m$), gemessen durch dynamische Differenz-Kalorimetrie (DSC), von mindestens 120,0°C,
und/oder
(b) einen Asche-Gehalt unter 100 ppm,
und/oder
(c) eine in kaltem Xylol lösliche Fraktion (XCS) von gleich oder unter 8,0 Gew.-%.

**4.** Kommunikationskabel nach einem der vorangehenden Ansprüche, wobei das Polypropylen (PP) aufweist

(a) weniger als 15,0 Gew.-% von einer kristallinen Fraktion, die bei einer schrittweisen isothermen Segregations-Technik-Analyse (SIST) oberhalb 160°C schmilzt,
und/oder
(b) eine Molekulargewichtsverteilung (MWD), gemessen gemäß ISO 16014, von mindestens 2,8,
und/oder
(c) eine Schmelze-Fließ-Rate $MFR_2$ (230°C), gemessen gemäß ISO 1133, von gleich oder mehr als 0,5 g/10 min.

**5.** Kommunikationskabel nach einem der vorangehenden Ansprüche, wobei das Polypropylen (PP) einen Verzweigungsindex g' von oberhalb 0,9 aufweist.

**6.** Kommunikationskabel nach einem der vorangehenden Ansprüche, wobei die Zusammensetzung (A) zusätzlich umfasst

(a) ein hoch schmelz-festes Polypropylen (HMS-PP), wobei das hoch schmelz-feste Polypropylen (HMS-PP) zu dem Polypropylen (PP) chemisch verschieden ist,
und/oder
(b) ein elastomeres Propylen-Copolymer (EP).

**7.** Zusammensetzung (A), umfassend

(a1) ein Polypropylen (PP), wobei das Polypropylen (PP) <2,1> Erythro-Regiodefekte von mehr als 0,1 Mol-%, bestimmt durch $^{13}C$-NMR-Spektroskopie, aufweist,
und
(b1) ein Phosphor-Antioxidans (Pho-A) und/oder ein Salz einer Fettsäure (S-FA), wobei das Kation des Salzes einer Fettsäure (S-FA) aus der Gruppe 2 des Periodensystems ausgewählt ist, vorzugsweise ist das Salz einer Fettsäure (S-FA) Calciumstearat (Ca-S)
und zusätzlich aufweist
(a2) ein hoch schmelz-festes Polypropylen (HMS-PP), wobei das hoch schmelz-feste Polypropylen (HMS-PP) zu dem Polypropylen (PP) chemisch verschieden ist,
und/oder
(b2) ein elastomeres Propylen-Copolymer (EP),
wobei das hoch schmelz-feste Polypropylen (HMS-PP) aufweist

(a) einen Verzweigungsindex g' von gleich oder unter 0, 9,
und/oder
(b) ein Kaltumformungs-Verhalten mit einer Abzugs-Kraft $F_{max}$ von mindestens 10,0 cN und eine Abzugs-Geschwindigkeit $v_{max}$ von mindestens 200 mm/s, und/oder
(c) eine in heißem Xylol unlösliche Fraktion (XHI) von nicht mehr als 1,0 Gew.-%,
und/oder
(d) eine Schmelze-Fließ-Rate $MFR_2$ (230°C) von 1,0 bis 10,0 g/10 min.

**8.** Kommunikationskabel nach einem der vorangehenden Ansprüche, wobei die Zusammensetzung (A) zusätzlich (a) phenolische (s) Antioxidans(tien) (Phe-A), das/die kein Phosphor-Antioxidans (Pho-A) darstellt/darstellen, umfasst.

**9.** Kommunikationskabel nach einem der vorangehenden Ansprüche, wobei die Zusammensetzung (A) umfasst

(a) mindestens 30 Gew.-% des Polypropylens (PP),

(b1) gegebenenfalls mindestens 10 Gew.-% des elastomeren Propylen-Copolymers (EP),
und/oder
(b2) gegebenenfalls mindestens 10 Gew.-% des hoch schmelz-festen Polypropylens (HMS-PP),
und wobei die Zusammensetzung (A) weiterhin umfasst
(c1) 1 bis 3 000 ppm von (a) Phosphor-Antioxidans(tien) (Pho-A), und/oder
(c2) 1 bis 200 ppm von (a) Salz(en) einer Fettsäure(n) (S-FA), vorzugsweise von Calciumstearat (Ca-S), und
(c3) gegebenenfalls unter 5 000 ppm (a) phenolische(s) Antioxidans(tien) (Phe-A), die keine Phosphor-Antioxidans(tien) (Pho-A) sind,

basierend auf der Zusammensetzung (A).

**10.** Kommunikationskabel nach einem der vorangehenden Ansprüche, wobei

(i) das Phosphor-Antioxidans (Pho-A) ein Organophosphit ist, vorzugsweise entweder Tris(2,4-di-t-butylphenyl)phosphit oder Bis(2,4-dicumylphenyl)-pentaerythritdiphosphit ist,
und/oder
(ii) das phenolische Antioxidans (Phe-A) ein sterisch gehindertes phenolisches Antioxidans, vorzugsweise ein phenolisches Antioxidans, ist, umfassend den Rest der Formel (I)

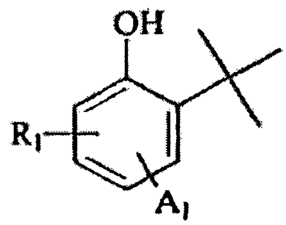

(I)

worin
$R_1$ an der ortho- oder meta-Position zu der HydroxylGruppe angeordnet ist, und $R_1$ $(CH_3)_3C$-, $CH_3$- oder H, vorzugsweise $(CH_3)_3C$-, ist und
$A_1$ den verbleibenden Teil des phenolischen Antioxidans (Phe-A) ausmacht.

**11.** Kommunikationskabel nach einem der vorangehenden Ansprüche, wobei

(i) das Polypropylen (PP) und gegebenenfalls das elastomere Propylen-Copolymer (EP) und/oder das hoch schmelz-feste Polypropylen (HMS-PP) das/die einzige(n) Polymer(e) in der Zusammensetzung ist/sind,
und/oder
(ii) die Zusammensetzung kein Zink-stearat enthält, und/oder
(iii) die Zusammensetzung keinen gehinderten Amin-Stabilisator (HALS) enthält.

**12.** Kommunikationskabel nach einem der vorangehenden Ansprüche, wobei die dielektrische Schicht einen Dissipations-Faktor tan $\delta$ von gleich oder unter 120 x $10^{-6}$ bei 1,9 GHz aufweist.

**13.** Kommunikationskabel nach einem der vorangehenden Ansprüche, wobei das Kommunikationskabel ein koaxiales oder triaxiales Kabel ist.

**14.** Verwendung eines Phosphor-Antioxidans (Pho-A) und/oder eines Salzes einer Fettsäure (S-FA), wobei das Kation des Salzes einer Fettsäure (S-FA) aus der Gruppe 2 des Periodensystems ausgewählt ist, vorzugsweise ist das Salz einer Fettsäure (S-FA) Calciumstearat (Ca-S), um den Dissipations-Faktor tan $\delta$ einer Zusammensetzung, umfassend ein Polypropylen (PP), wie in den Ansprüchen 1 bis 6 definiert, und das Phosphor-Antioxidans (Pho-A) und/oder das Salz einer Fettsäure (S-FA), gleich oder unter 120 x $10^{-6}$ bei 1,9 GHz zu halten.

## Revendications

1. Câble de communication comprenant un conducteur et une couche diélectrique, ladite couche diélectrique comprenant une composition (A) comprenant

   (a) un polypropylène (PP), le polypropylène (PP) présentant plus de 0,1 % en moles, déterminé par spectroscopie RMN-$^{13}C$, de régiodéfauts érythro <2,1>,
   et
   (b) un antioxydant au phosphore (Pho-A) et/ou un sel d'un acide gras (S-FA), le cation du sel d'acide gras (S-FA) étant choisi dans le Groupe 2 du Tableau périodique, le sel d'acide gras (S-FA) étant de préférence le stéarate de calcium (Ca-S).

2. Câble de communication selon la revendication 1, dans lequel

   (a) le polypropylène (PP) est un homopolymère de propylène (H-PP) ou un copolymère de propylène statistique (R-PP),
   et/ou
   (b) la couche diélectrique comprend au moins 85 % en poids de la composition (A),
   et/ou
   (c) la composition (A) est expansée.

3. Câble de communication selon l'une quelconque des revendications précédentes, dans lequel le polypropylène (PP) présente

   (a) un point de fusion ($T_m$), mesuré par calorimétrie à balayage différentiel (DSC), d'au moins 120,0°C,
   et/ou
   (b) une teneur en cendres inférieure à 100 ppm,
   et/ou
   (c) une fraction soluble dans le xylène froid (XCS) égale ou inférieure à 8,0 % en poids.

4. Câble de communication selon l'une quelconque des revendications précédentes, dans lequel le polypropylène (PP) présente

   (a) moins de 15,0 % en poids d'une fraction cristalline fondant dans une analyse par technique de ségrégation isotherme étagée (SIST) au-delà de 160°C,
   et/ou
   (b) une distribution des masses moléculaires (MWD), mesurée conformément à la norme ISO 16014, d'au moins 2,8, et/ou
   (c) un indice de fluage $MFR_2$ (230°C), mesuré conformément à la norme ISO 1133, égal ou supérieur à 0,5 g/10 min.

5. Câble de communication selon l'une quelconque des revendications précédentes, dans lequel le polypropylène (PP) présente un indice de ramification g' supérieur à 0,9.

6. Câble de communication selon l'une quelconque des revendications précédentes, dans lequel la composition (A) comprend de plus

   (a) un polypropylène présentant une résistance élevée à l'état fondu (HMS-PP), ledit polypropylène présentant une résistance élevée à l'état fondu (HMS-PP) étant chimiquement différent du polypropylène (PP),
   et/ou
   (b) un copolymère de propylène élastomère (EP).

7. Composition (A) comprenant

   (a1) un polypropylène (PP), le polypropylène (PP) présentant plus de 0,1 % en moles, déterminé par spectroscopie RMN-$^{13}C$, de régiodéfauts érythro <2,1>,
   et
   (b1) un antioxydant au phosphore (Pho-A) et/ou un sel d'un acide gras (S-FA), le cation du sel d'acide gras (S-FA) étant choisi dans le Groupe 2 du Tableau périodique, le sel d'acide gras (S-FA) étant de préférence le stéarate de calcium (Ca-S),
et comprenant de plus
(a2) un polypropylène présentant une résistance élevée à l'état fondu (HMS-PP), ledit polypropylène présentant une résistance élevée à l'état fondu (HMS-PP) étant chimiquement différent du polypropylène (PP),
et/ou
(b2) un copolymère de propylène élastomère (EP),
dans laquelle le polypropylène présentant une résistance élevée à l'état fondu (HMS-PP) présente

(a) un indice de ramification g' égal ou inférieur à 0,9, et/ou
(b) un comportement d'écrouissage avec une force de tirage $F_{max}$ d'au moins 10,0 cN et une vitesse de striction $v_{maX}$ d'au moins 200 mm/s,
et/ou
(c) une fraction insoluble dans le xylène chaud (XHI) d'au plus 1,0 % en poids,
et/ou
(d) un indice de fluage $MFR_2$ (230°C) de 1,0 à 10,0 g/10 min.

**8.** Câble de communication selon l'une quelconque des revendications précédentes, dans lequel la composition (A) comprend de plus (a) un ou plusieurs antioxydant (s) phénolique(s) (Phe-A) autre(s) qu'un antioxydant au phosphore (Pho-A).

**9.** Câble de communication selon l'une quelconque des revendications précédentes, dans lequel la composition (A) comprend

(a) au moins 30 % en poids du polypropylène (PP),
(b1) éventuellement au moins 10 % en poids du copolymère de propylène élastomère (EP),
et/ou
(b2) éventuellement au moins 10 % en poids du polypropylène présentant une résistance élevée à l'état fondu (HMS-PP),
et dans lequel la composition (A) comprend en outre
(c1) 1 à 3000 ppm d'un ou plusieurs antioxydant(s) au phosphore (Pho-A), et/ou
(c2) 1 à 200 ppm d'un ou plusieurs sel(s) d'un ou plusieurs acide(s) gras (S-FA), de préférence de stéarate de calcium (Ca-S), et
(c3) éventuellement moins de 5000 ppm d'un ou plusieurs antioxydant(s) phénolique(s) (Phe-A) autre(s) qu'un ou plusieurs antioxydant(s) au phosphore (Pho-A),

sur la base de la composition (A).

**10.** Câble de communication selon l'une quelconque des revendications précédentes, dans lequel

(i) l'antioxydant au phosphore (Pho-A) est un phosphite organique, de préférence soit le phosphite de tris(2,4-dit-butylphényle) soit le diphosphite de bis(2,4-dicumylphényl)pentaérythritol,
et/ou
(ii) l'antioxydant phénolique (Phe-A) est un antioxydant phénolique à encombrement stérique, de préférence un antioxydant phénolique comprenant le résidu de formule (I)

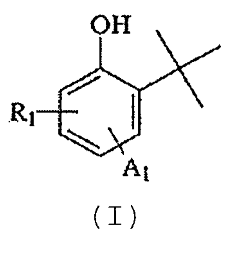

(I)

dans laquelle

$R_1$ est situé en position ortho ou méta par rapport au groupe hydroxyle et $R_1$ est $(CH_3)_3C$-, $CH_3$- ou H, de préférence $(CH_3)_3C$-, et
$A_1$ constitue la partie restante de l'antioxydant phénolique (Phe-A).

**11.** Câble de communication selon l'une quelconque des revendications précédentes, dans lequel

(i) le polypropylène (PP) et éventuellement le copolymère de propylène élastomère (EP) et/ou le polypropylène présentant une résistance élevée à l'état fondu (HMS-PP) est/sont le(s) seul(s) polymère(s) dans la composition, et/ou
(ii) la composition ne contient pas de stéarate de zinc, et/ou
(iii)la composition ne contient pas de stabilisant de type amine encombrée (HALS).

**12.** Câble de communication selon l'une quelconque des revendications précédentes, dans lequel la couche diélectrique présente un facteur de dissipation tan $\delta$ égal ou inférieur à $120 \times 10^{-6}$ à 1,9 GHz.

**13.** Câble de communication selon l'une quelconque des revendications précédentes, lequel câble de communication est un câble coaxial ou triaxial.

**14.** Utilisation d'un antioxydant au phosphore (Pho-A) et/ou d'un sel d'un acide gras (S-FA), le cation du sel d'acide gras (S-FA) étant choisi dans le Groupe 2 du Tableau périodique, le sel d'acide gras (S-FA) étant de préférence le stéarate de calcium (Ca-S), pour maintenir le facteur de dissipation tan $\delta$ d'une composition comprenant un polypropylène (PP), tel que défini dans les revendications 1 à 6, et l'antioxydant au phosphore (Pho-A) et/ou le sel d'acide gras (S-FA), égal ou inférieur à $120 \times 10^{-6}$ à 1, 9 GHz.

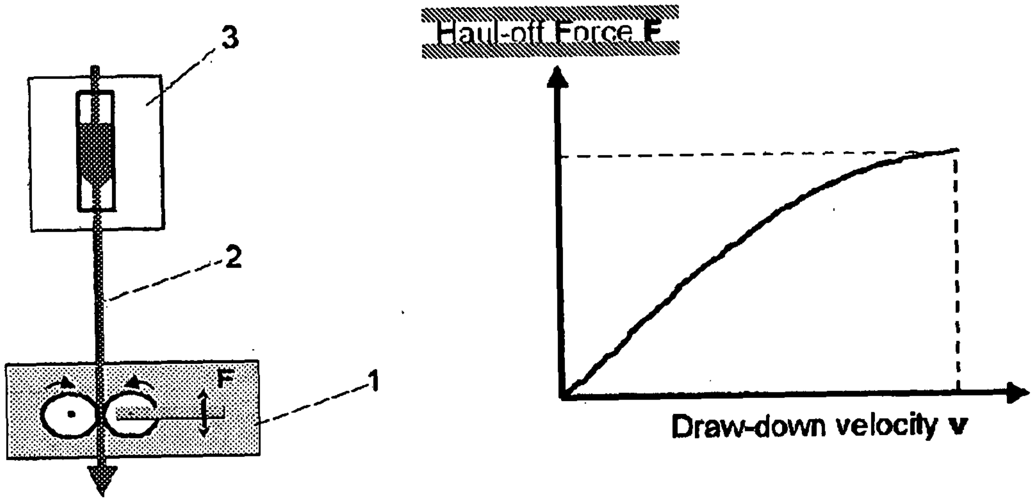


Figure 1

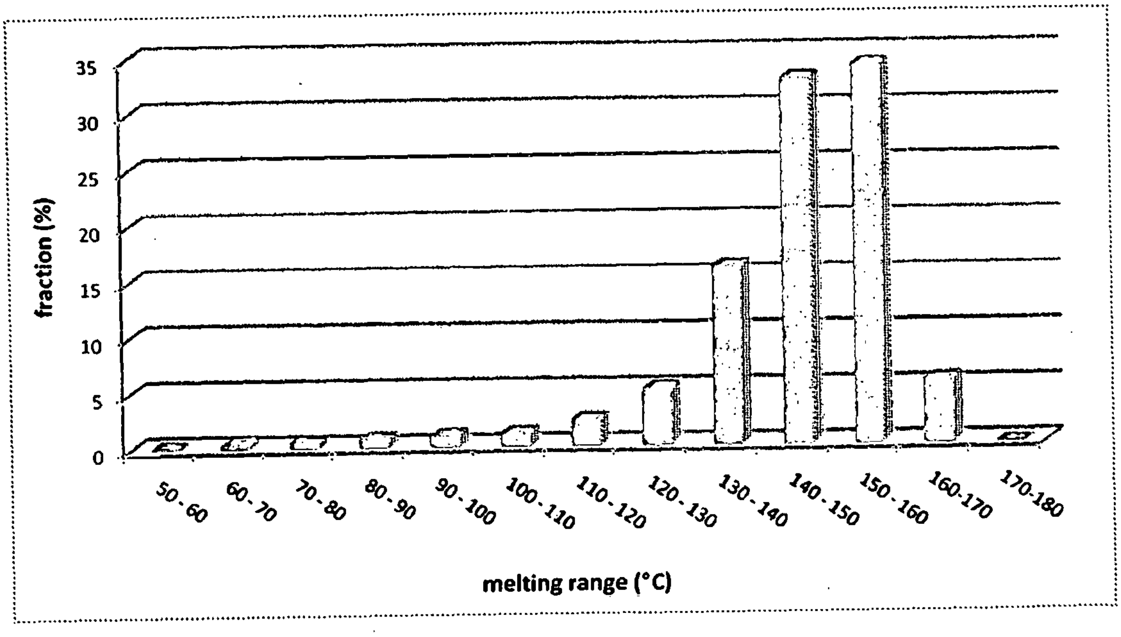


Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0787750 A
- EP 0879830 A1
- EP 0890612 A2
- EP 0887379 A
- WO 9212182 A
- WO 9858976 A
- WO 03051934 A
- WO 2006069733 A
- WO 0148034 A
- WO 2005105863 A2


### Non-patent literature cited in the description


- **RESCONI et al.** *Chemical Reviews,* 2000, vol. 100 (4), 1263
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **SINGH, G. ; KOTHARI, A ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson,* 2007, vol. 187, 225
- **RESCONI, L. ; CAVALLO, L ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **BUSICO, V. ; CIPULLO, R. ; MONACO, G. ; VACATELLO, M. ; SEGRE, A.L.** *Macromoleucles,* 1997, vol. 30, 6251
- **RESCONI, L. ; CAVALLO, L. ; FAIT, A. ; PIEMONTESI, F.** *Chem. Rev.,* 2000, vol. 100, 1253
- **CHENG, H. N.** *Macromolecules,* 1984, vol. 17, 1950
- **KAKUGO, M. ; NAITO, Y. ; MIZUNUMA, K. ; MIYATAKE, T.** *Macromolecules,* 1982, vol. 15, 1150
- **RANDALL.** *J. Macromol. Sci., Rev. Macromol. Chem. Phys.,* 1989, vol. C29, 201
- **G. SAUNDERS ; P. A. G: CORMACK ; S. GRAHAM ; D. C. SHERRINGTON.** *Macromolecules,* 2005, vol. 38, 6418-6422
- **M. H. WAGNER.** Rheotens-Mastercurves and Drawability of Polymer Melts. *Polymer Engineering and Science, MID-APRIL ISW,* vol. 36 (7), 925-935
- **J KRUPKA ; R N CLARKE ; O C ROCHARD ; A P GREGORY.** Split-Post Dielectric Resonator technique for precise measurements of laminar dielectric specimens - measurement uncertainties. *Proceedings of the XIII Int. Conference MIKON'2000, Wroclaw, Poland,* 2000, 305-308